# EUROPEAN PATENT SPECIFICATION

(11) **EP 4 109 236 B1**
(45) Date of publication and mention of the grant of the patent: **17.12.2025**
(21) Application number: 22164550.0
(22) Date of filing: 25.03.2022
(51) Int. Cl.: G06F 7/53

(54) **AREA AND ENERGY EFFICIENT MULTI-PRECISION MULTIPLY-ACCUMULATE UNIT-BASED PROCESSOR**
FLÄCHEN- UND ENERGIEEFFIZIENTER MEHRFACHPRÄZISER MULTIPLIKATIONSAKKUMULATIONSEINHEITSBASIERTER PROZESSOR
PROCESSEUR BASÉ SUR UNE UNITÉ DE MULTIPLICATION-ACCUMULATION MULTI-PRÉCISION DE ZONE ET ÉCONOME EN ÉNERGIE

(30) Priority: 25.06.2021 US 202117358868
(43) Date of publication of application: 28.12.2022
(73) Proprietor: INTEL Corporation, Santa Clara, CA 95054 (US)
(72) Inventor: KRISHNAMURTHY, Ram, Portland, 97229 (US); ANDERS, Mark, Hillsboro, 97124 (US); KAUL, Himanshu, Portland, 97225 (US); CHINYA, Gautham, Sunnyvale, 94089 (US); POWER, Martin, Chapelizod, D20 V024 (IE); MOHAPATRA, Debabrata, Santa Clara, 95054 (US); RAHA, Arnab, San Jose 95136 (US); LANGHAMMER, Martin, Alderbury, SP5 3AB (GB); BRICK, Cormac, San Francisco, 94117 (US)
(74) Representative: HGF

(56) References cited:
- US-A1- 2019 042 252
- US-A1- 2020 125 329

## Description

### TECHNICAL FIELD

Embodiments generally relate to multiply-accumulate (MAC) processors. More particularly, embodiments relate to area and energy efficient multi-precision MAC ("MultiMAC") unit-based processors.

### BACKGROUND

Deep Neural Networks (DNN) may be useful for a host of applications in the domains of computer vision, speech recognition, image, and video processing, primarily due to the ability of DNNs to achieve high levels of accuracy relative to human-based computations. The improvements in accuracy, however, may come at the expense of significant computational cost. For example, the underlying deep neural networks typically have extremely high computing demands, as each test input involves on the order of hundreds of millions of MAC operations as well as hundreds of millions of filter weights to be processed for classification or detection.

As a result, high-end graphics processing units (GPUs) may be suitable to execute these types of workloads because GPUs typically contain thousands of parallel MAC units that can simultaneously operate and produce the output in much less time. GPUs, however, may have very high-power consumption that make them unsuitable to be deployed in highly energy constrained mobile/embedded systems where energy and area budgets are extremely limited.

### BRIEF DESCRIPTION OF THE DRAWINGS

The various advantages of the embodiments will become apparent to one skilled in the art by reading the following specification and appended claims, and by referencing the following drawings, in which:
FIG. 1 is a block diagram of an example of a MAC processor according to an embodiment;
FIG. 2 is a comparative block diagram of an example of a conventional single precision MAC unit and a multi-precision MAC unit according to an embodiment;
FIG. 3 is a comparative block diagram of an example of a conventional multi-precision MAC unit and a multi-precision MAC unit according to an embodiment;
FIG. 4 is a comparative schematic diagram of an example of a conventional multi-precision MAC unit and a multi-precision MAC unit according to an embodiment;
FIG. 5A is a block diagram of an example of a multi-precision MAC unit operating in an 8-bit precision mode according to an embodiment;
FIG. 5B is a block diagram of an example of a multi-precision MAC unit operating in a 4-bit precision mode according to an embodiment;
FIG. 5C is a block diagram of an example of a multi-precision MAC unit operating in a 2-bit precision mode according to an embodiment;
FIG. 5D is a block diagram of an example of a multi-precision MAC unit operating in a binary precision mode according to an embodiment;
FIG. 6 is a comparative block diagram of an example of a conventional binary data path architecture and a binary data path architecture according to an embodiment;
FIG. 7 is an illustration of an example of sum values for combinations of activation and weight pairs according to an embodiment;
FIG. 8 is a comparative block diagram of an example of a conventional binary MAC unit and a multi-precision MAC unit operating in a binary precision mode according to an embodiment;
FIG. 9 is a block diagram of an example of a multiplier addition within an arithmetic block and across arithmetic blocks according to embodiments;
FIG. 10 is a block diagram of an example of a Booth encoding radix-4 (R4) multiplier architecture according to an embodiment;
FIG. 11 is a block diagram of an example of a Booth encoding R4 rank summed multiplier architecture according to an embodiment;
FIG. 12 is a block diagram of an example of a Booth encoding R4 signed magnitude multiplier architecture according to an embodiment;
FIG. 13 is a block diagram of an example of a Booth encoding R4 rank order signed magnitude multiplier array architecture according to an embodiment;
FIG. 14 is an illustration of an example of an integer-4 (INT4) partial product mapping onto integer-8 (INT8) data paths according to an embodiment;
FIG. 15 is a block diagram of an example of an INT8 and INT4 data path mapping according to an embodiment;
FIG. 16 is a block diagram of an example of INT8 and INT4 signed magnitude mappings according to an embodiment;
FIG. 17 is a block diagram of an example of floating point extensions according to an embodiment;
FIG. 18 is a block diagram of an example of cascaded floating point arithmetic blocks according to an embodiment;
FIG. 19 is a block diagram of an example of a block sparsity architecture with multi-precision MAC according to an embodiment;
FIG. 20 is a block diagram of an example of a find-first block sparsity architecture with multi-precision MAC according to an embodiment;
FIG. 21 is a block diagram of an example of a sparsity architecture working with floating point mode according to an embodiment;
FIG. 22 is a flowchart of an example of a method of fabricating a MAC processor according to an embodiment;
FIGs. 23-28 are flowcharts of examples of methods of operating a MAC processor according to an embodiment;
FIG. 29A is a flowchart of an example of method of fabricating a MAC processor according to another embodiment;
FIGs. 29B-29C are flowcharts examples of methods of operating a MAC processor according to other embodiments;
FIG. 30A is a block diagram of an example of a performance-enhanced computing system according to an embodiment;
FIG. 30B is an illustration of an example of a semiconductor apparatus according to an embodiment;
FIG. 31 is a block diagram of an example of a processor according to an embodiment; and
FIG. 32 is a block diagram of an example of a multi-processor based computing system according to an embodiment.

### DETAILED DESCRIPTION OF EMBODIMENTS

The process of quantization can be effective in making relatively large DNN models compact to be deployed on area and energy constrained mobile and other edge devices. Quantization reduces the precision of weights, feature maps, and intermediate gradients from the baseline floating point sixteen/Brain floating sixteen (FP16/BF16) to integer-8/4/2/1 (INT8/4/2/1). Not only does this approach reduce storage requirements by 2X/4X/8X/16X, but the approach also reduces computation complexity by a similar degree that results in a proportional improvement in throughput. As a result, some of the most advanced state-of-the-art DNN accelerators are built with the ability to perform MAC operations of multiple precisions (INT8/4/2/1). The introduction of a multi-precision MAC basically leads to performance improvements that can significantly improve two measurable metrics for DNN accelerators: i) performance per unit area measured using the TOPS/mm² (Tera (1012) operations per mm²) metric, and ii) performance per unit energy measured using the TOPS/W (Tera (1012) operations per Watt) metric.

Embodiments provide for a DNN processing engine (PE) that can support MAC operations of different precisions, (INT8/4/2/1 to FP16/BF16) while using a common low overhead sparsity acceleration logic. The primary contributions presented by embodiments are related to the ways that data is implemented and fed to the multi-precision MAC unit based on sparsity. Towards that end, "MultiMAC" is an area-efficient, multi-precision multiply and accumulate unit-based processing element in DNN accelerators, where embodiments intelligently share circuit elements among various precision circuits to reduce the area overhead and the energy consumption of the multi-precision MAC unit. The sharing of the circuit elements is enabled by using a data flow that allows input channel-based accumulation (e.g., common in most tensor operations in a DNN accelerator).

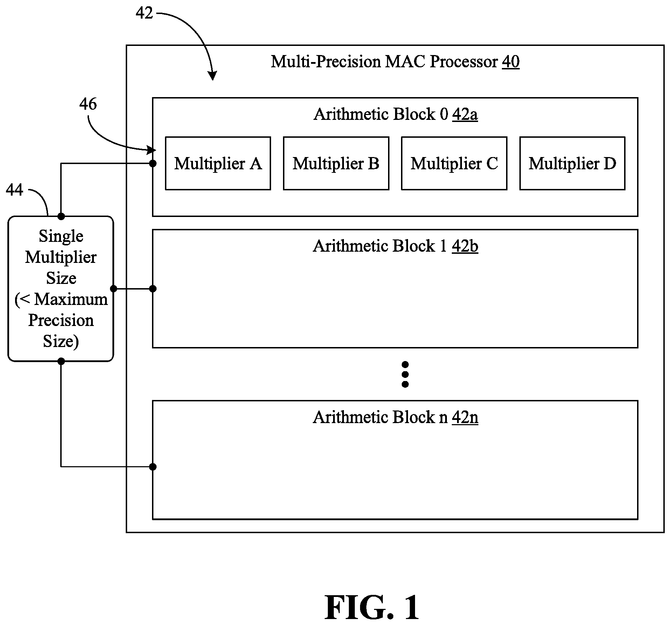

FIG. 1 shows a multi-precision MAC processor 40 that includes a plurality of arithmetic blocks 42 (42a-42n, e.g., arithmetic logic units/ALUs), wherein the plurality of arithmetic blocks 42 share a single multiplier size 44 that is uniform across the plurality of arithmetic blocks 42 (e.g., all multipliers are of the same size). In the illustrated example, each of the arithmetic blocks 42 includes a set of multipliers 46 and each of the multipliers 46 operates on the same number of bits. Additionally, the single multiplier size 44 is less than a maximum precision size supported by the plurality of arithmetic blocks. In one example, the maximum precision size is eight bits (e.g., integer-8/INT8, unsigned integer-8/UINT8) and the single multiplier size 44 is five bits (5b). In an embodiment, the multi-precision MAC processor 40 includes logic (e.g., logic instructions, configurable hardware, fixed-functionality hardware, etc., or any combination thereof) to arrange sparsity information for activations and weights in accordance with a bitmap format that is common to multiple precisions.

As will be discussed in greater detail, the processor 40 provides an area-efficient, multi-precision multiply and accumulate unit-based processing element for DNN accelerators, where circuit elements are shared among various precision circuits to reduce the area overhead and the energy consumption of the multi-precision MAC processor 40. For example, only four 5-bit (5b) multipliers 46 are sufficient to support eight different precision modes for MAC operations such as INT8, UINT8, INT4, UINT4, U4_I4, I4_U4, INT2, and INT1. Here, INT1 is effectively binary (BIN) mode with values -1 and 1 represented by 0 and 1. Integration of the processor 40 enables a dense TOPS/mm² of an accelerator to be increased by almost 2X, 4X, and 8X, respectively, when executing quantized inferences in INT4/2/1 precision modes.

Additionally, by recoding activations and weights in groups of 4-bits, a binarized convolution is realized using INT2 hardware or signed -5b multipliers in this case (e.g., by contrast, other approaches typically require separate hardware and data paths to support both binarized and integer convolutions in a single MAC). Embodiments reduce the area of multi-precision MACs that must support both integer and binarized convolutions. Integration of the processor 40 also enables a dense TOPS/W of an accelerator to be increased by 1.87X, 3.75X, and 7.5X, respectively when running quantized inferences in INT4/2/1 precision modes.

Due to the innovative way of sharing logic for different precisions, the processor 40 may improve the area by 32% at 1.8GHz compared to existing multi-precision MAC designs. Indeed, the processor 40 also works seamlessly without any additional overhead in coordination with find-first sparsity acceleration techniques via block sparsity. Using this strategy, 1.06X, 1.19X, 1.44X and 1.08X, 1.15X, 1.31X more TOPS/W and TOPS/mm2 improvements are obtained, respectively, over the baseline case (INT8) where the sparsity logic complexity varies proportionally to the number of operands. For 50% sparsity, the proposed accelerator achieves 1.88X, 3.75X, 7.5X, 15X and 1.95X, 3.98X, 7.97X, 15.93X higher TOPS/W and TOPS/mm² for INT8/4/2/1 modes compared to accelerators without any MultiMAC support.

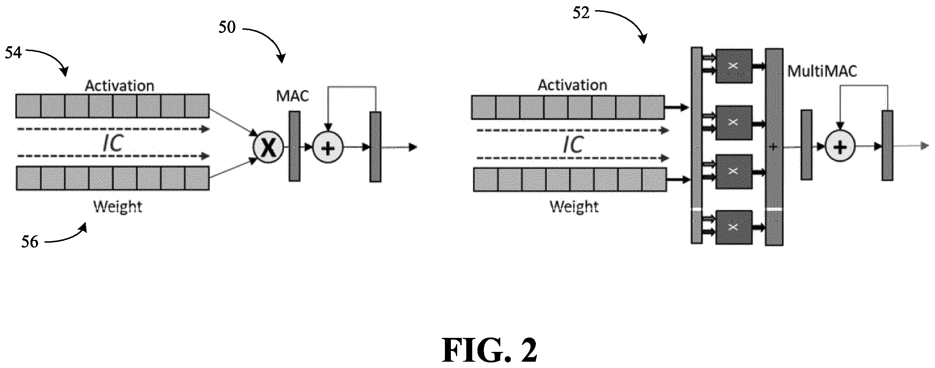

FIG. 2 shows a conventional a single precision (INT8) MAC unit 50 that may form the core of most DNN accelerators. By contrast, an enhanced multi-precision MAC unit 52 supports multiple INT precision modes. In the illustrated example, the conventional MAC unit 50 (e.g., located in each PE of a DNN accelerator) accumulates over input channels (IC). In this mode, the data that is to be accumulated (either belonging to input channels or to a NxN filter window) are fed sequentially one after another from an internal activation register file (RF) 54 and weight register file (RF) 56.

Embodiments implement a compute near memory microarchitecture where each PE includes one or more of the enhanced MAC units 52 along with local memory or register files for storing the activations (IF RF) and the filter weights (FL RF). The output activations are stored within the OF RF. In this particular mode of operation, the IF and FL RFs are arranged sequentially in the IC dimension so that the MAC unit within each PE can be fed with these values one after another that are then multiplied and accumulated over time and stored in the OF RF. Due to the existence of this mode of operation, PEs can accumulate over ICs every round which enables the current MultiMAC implementation where each INT8/byte operand within the RFs can be assumed to be either a single IC or multiple ICs of bitwidth 4, 2, and 1. For IC bitwidths 1, 2, 4, and 8, each byte represents 8, 4, 2, and 1 ICs, respectively. For the sake of simplicity, an IC is consistently split into multiple smaller precision ICs so that it can be accumulated with the help of the MultiMAC. At lower precision modes, the enhanced MAC unit 52 enables the accumulation of multiple ICs (1/2/4/8) in a single clock period. Since the enhanced MAC unit 52 is designed to operate at the same high frequency as that of the single precision MAC unit 50, the accumulation of multiple ICs in a single clock cycle leads to significantly higher throughput (TOPS). Note that this fixed way of grouping or concatenating lower precision ICs into a single operand involves the least changes or additions in the load, compute, and drain of a typical DNN accelerator to support multi-precision convolutions.

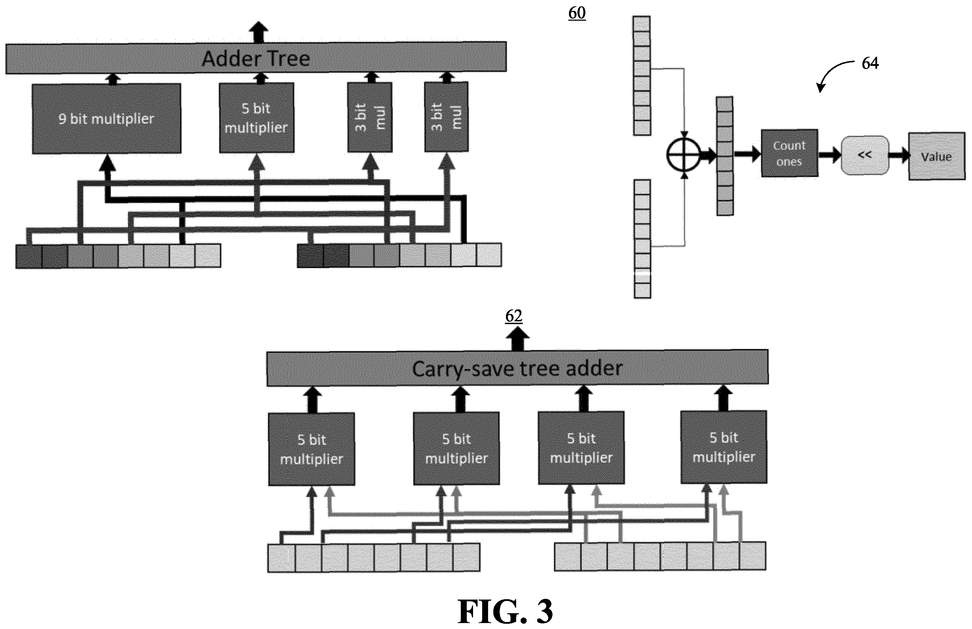

FIG. 3 shows a conventional multi-precision MAC unit 60 and an enhanced multi-precision MAC unit 62 that maximizes the sharing of circuit logic for supporting INT8/4/2/1 modes. The conventional multi-precision MAC unit 60 implements binary mode using a separate piece of logic 64 that includes mainly bitwise shift and other simple logical operations. In the enhanced multi-precision MAC unit 62, the logic 64 is completely removed via circuit sharing technology.

The application of MultiMAC is not limited to the domain of machine learning accelerators. Multi-precision multipliers are also useful for many GPU-specific as well as various image and video processing hardware accelerators. To be more specific, any application that uses multiply-accumulate operations and can tolerate quantization errors such as most applications in the domains of multimedia processing (graphics, video, image, audio, speech, etc.) may benefit from the MultiMAC technology described herein.

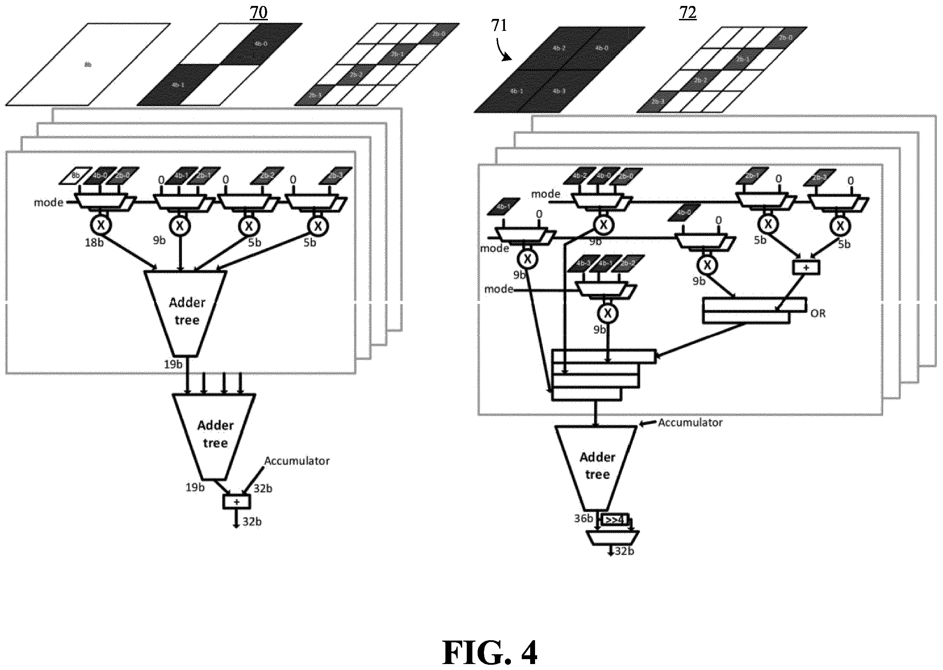

FIG. 4 shows a comparison between a conventional multi-precision MAC unit 8b/4b/2b data path 70 and a MultiMAC enhanced data path 72. For each 8b weight and activation in the data path 70, a 9bx9b multiplier is used to support signed or unsigned 8b input data. This multiplier is reused for some of the lower precision signed/unsigned 4b/2b multiplication operations ("multiplies"). A separate 5bx5b multiplier is used in 4b and 2b signed/unsigned modes, and two 2bx2b multipliers calculate the remaining portions of the 2b mode multiplies. The four multiplier outputs are summed in an adder tree and then combined with the outputs of the other four 8b channels for a final dot product adder tree. The accumulator is also added at this stage.

By contrast, the enhanced data path 72 includes multi-precision MAC unit, with no explicit 8b multiplier. Instead, the 8b mode is implemented using four separate 4b quadrant multipliers 71. Furthermore, rather than complete product computes per channel, sub-products are summed across channels to obtain the same result with lower area. This optimization takes advantage of the fact that intermediate results may be disregarded, with only the final dot-product being relevant. The enhanced data path 72 also ensures minimal reconfiguration multiplexers in the final adder tree. As a result of this dot-product structure, 4b,2b dot-products are shifted left by 4b. Instead of correcting that shift by reconfiguring the carry-save tree, a non-critical accumulator input is shifted left by 4b and the final result is shift right by 4b in modes lower than 8b. This approach causes adder-tree width to grow by 4b but lower area is obtained overall. Per channel computations are completed before summation across channels in the illustrated enhanced data path 72.

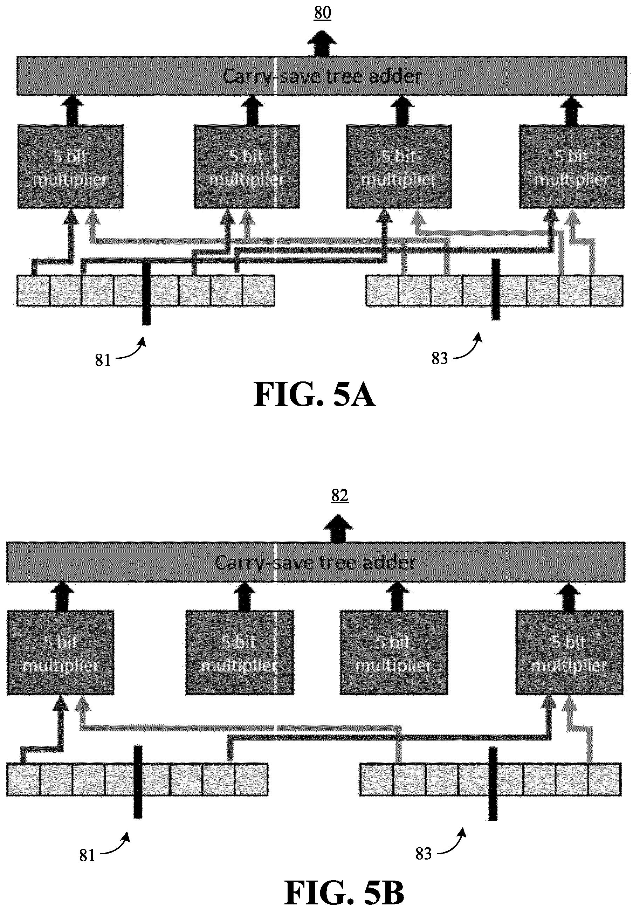

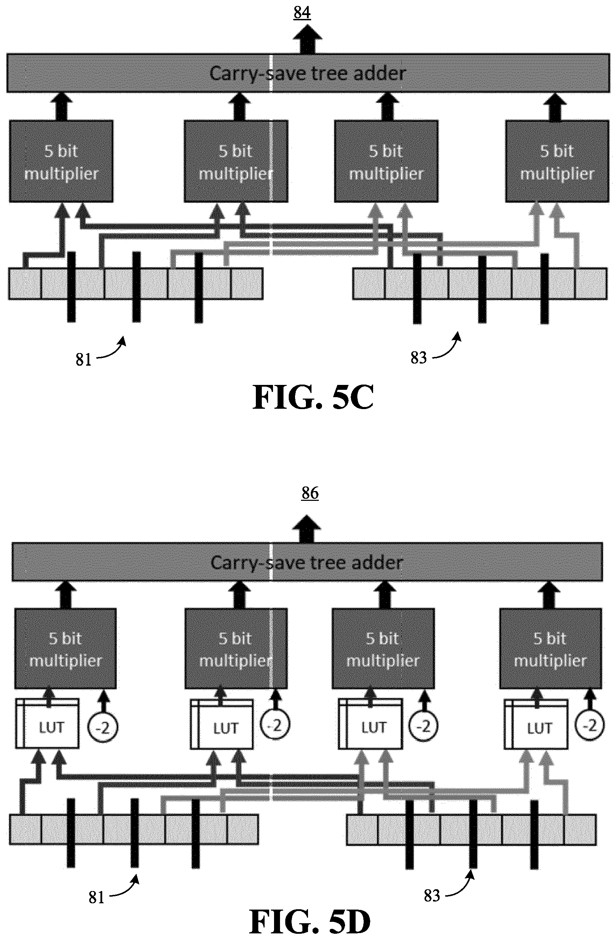

FIGs. 5A-5D show the sharing of logic circuits in MultiMAC across different precision modes. More particularly, FIG. 5A shows a MultiMAC unit 80 operating on eight bits of activation data 81 and eight bits of weight data 83 in INT8/UINT8 modes, FIG. 5B shows a MultiMAC unit 82 operating in INT4/UINT4 modes, FIG. 5C shows a MultiMAC unit operating in INT2/UINT2 modes, and FIG. 5D shows a MultiMAC unit 86 operating in INT1/Binary mode.

Thus, FIGs. 5A-5D demonstrate the seven modes of MultiMAC operation. The seven modes of operation support seven different datatypes - UINT8, INT8, UINT4, INT4, UINT2, INT2, and INT1 or binary (BIN). Note that independent of the selected datatype, the final output values are consistently accumulated as INT32 (32-bit integers) and are stored in the OF RF. These 32-bit accumulated outputs are finally fed to a PPE to be again converted to the target bitwidth and act as the input activation for the next layer. Note that the MAC units 80, 82, 84, 86 are pipelined internally between the multi-precision multiplier blocks and the accumulator. Moreover, all seven different precision modes use the same set of four signed INT5 multipliers that are used in combination for each of the different precision modes. The illustrated solution can also support several other hybrid precision modes such as UINT4_INT8 and INT8_UINT4 also with the same logic.

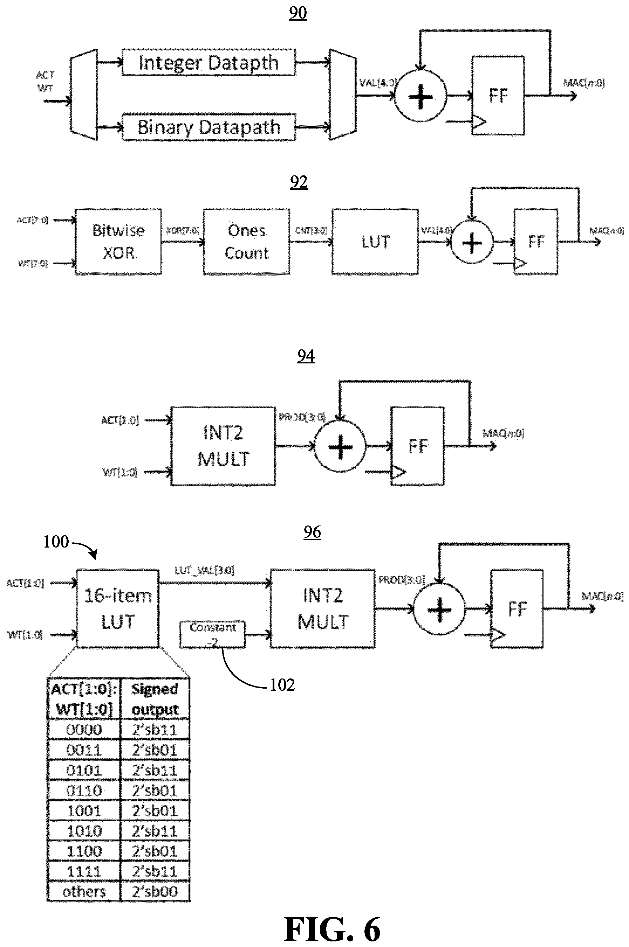

FIG. 6 shows a conventional data path 90 and a conventional convolution architecture 92 in comparison to an enhanced data path 94 and an enhanced convolution architecture 96. In an embodiment, the binary convolution logic is eliminated by implementing the binary convolution logic via the signed INT2 logic that is already supported within the MultiMAC. Binarized neural networks constrain weights and activations to be +1 or -1. In hardware, +1 is represented as 1b and -1 is represented as 0b. Typical integer (signed/unsigned) convolutions use two's complement arithmetic and hardware to perform the multiply-accumulate (MAC) operation. The integer MAC hardware cannot directly be used to perform the binarized +1/-1 MAC operation. The conventional data path 90 and convolution architecture 92 use dedicated hardware for binary convolution without sharing any logic with higher precision MAC hardware.

The conventional convolution architecture 92 shows an example circuit to perform the MAC operation for a byte of activations and a byte of weights, where each byte contains eight binary activations/weights. First, the activations and weights are XOR-ed together and the number of ones in the result is counted. The number of ones counted in the XOR-ed result is used to generate an index into a LUT (lookup table) and the LUT returns the sum of the binarized products in the range {-8,-6,-4,2,0,2,4,6,8}. The LUT output is added to the accumulator to produce the MAC result. This approach requires a separate binary datapath and a separate integer datapath in the MAC.

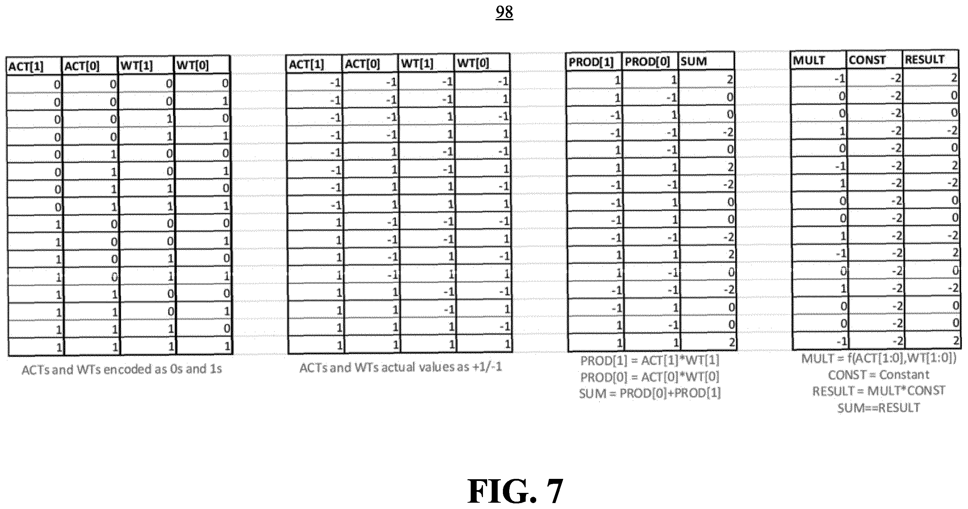

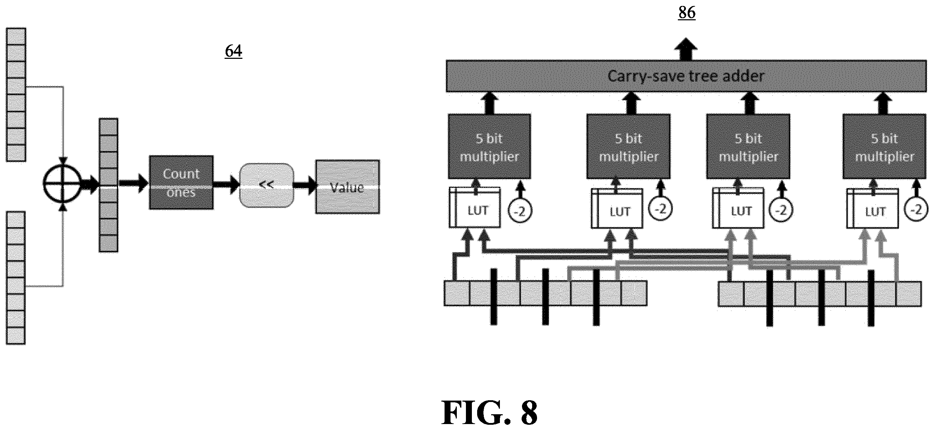

With continuing reference to FIGs. 6 and 7, however, a sum values table 98 provides some hints to for the binary convolution to share logic with INT2 convolution. More particularly, the table 98 considers two bits of activations and two bits of weights. The final SUM = PROD[1]+PROD[0], where PROD[0] = ACT[0]*WT[0] and PROD[1] = ACT[1]*WT[1]. The intermediate MULT is created as a decode of {ACT[1:0], WT[1:0]} using a lookup table (LUT) 100 and a constant (CONST) 102, which is fixed at -2. The final RESULT = MULT*CONST and gives same result as SUM. As result, the dedicated binary data path is no longer needed in MAC units and can be entirely eliminated. In an embodiment, the dedicated binary data path is replaced by a 16-item look up operation to drive inputs into INT2 MAC hardware. This approach scales to n-bit but the size of the lookup increases exponentially (e.g., INT4 involves a 256-item lookup). There are both area and energy benefits of this approach. Thus, FIGs. 6 and 7 demonstrate how the binary logic may be implemented using INT2 logic and 5b multipliers. FIG. 8 shows a side-by-side comparison of the conventional binary logic 64 and the MultiMAC unit 86 operating in INT1/Binary mode with a common 5-bit multiplier.

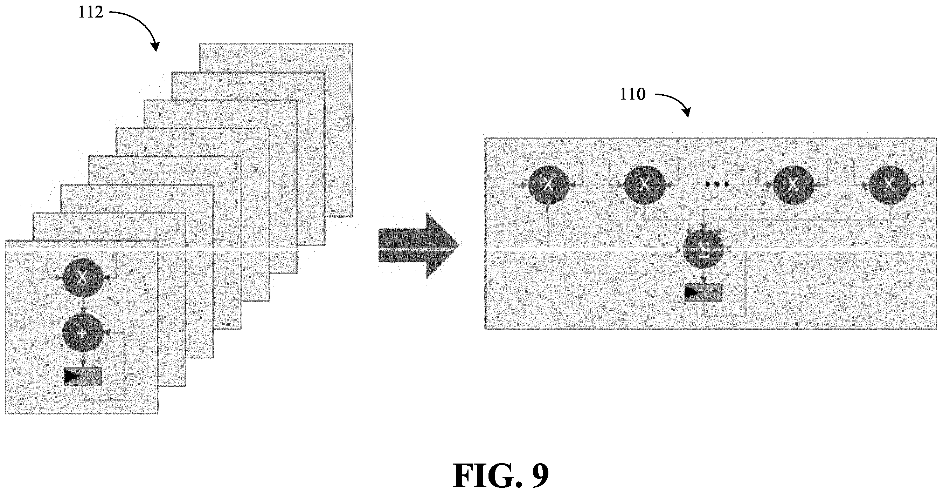

FIG. 9 demonstrates that embodiments may support higher precision operations by sharing circuitry from lower precision ones in a more generic way. More particularly, the technology described herein may be applied to a single functional unit 110 (arithmetic block, ALU block), or across multiple functional units 112. Sums of multipliers can be implemented locally, or across many normally independent paths. More efficient ways of implementing the sums may be obtained by grouping multi-operand additions by rank (e.g., bit position) subsets first.

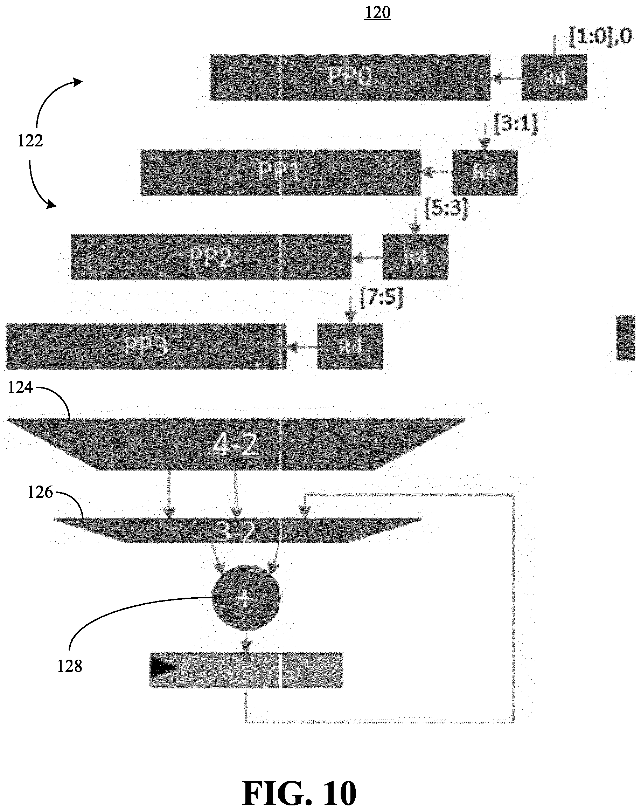

FIG. 10 shows a structure of an application specific integrated circuit (ASIC) multiplier architecture 120 that is implemented based on the Booth encoding radix-4 (R4) multiplier. The multiplicand is used to create partial products 122 ("PP0"-"PP3"), based on tri-bit encodings of the multiplier operand. The partial products are added. In one example, the partial products are compressed in redundant form using a 4-2 compressor 124 or a 3-2 compressor 126, usually in a Wallace tree or Dadda tree, although other compressors, counters, and tree topologies may be used. The two final redundant vectors are added by a carry propagate adder 128.

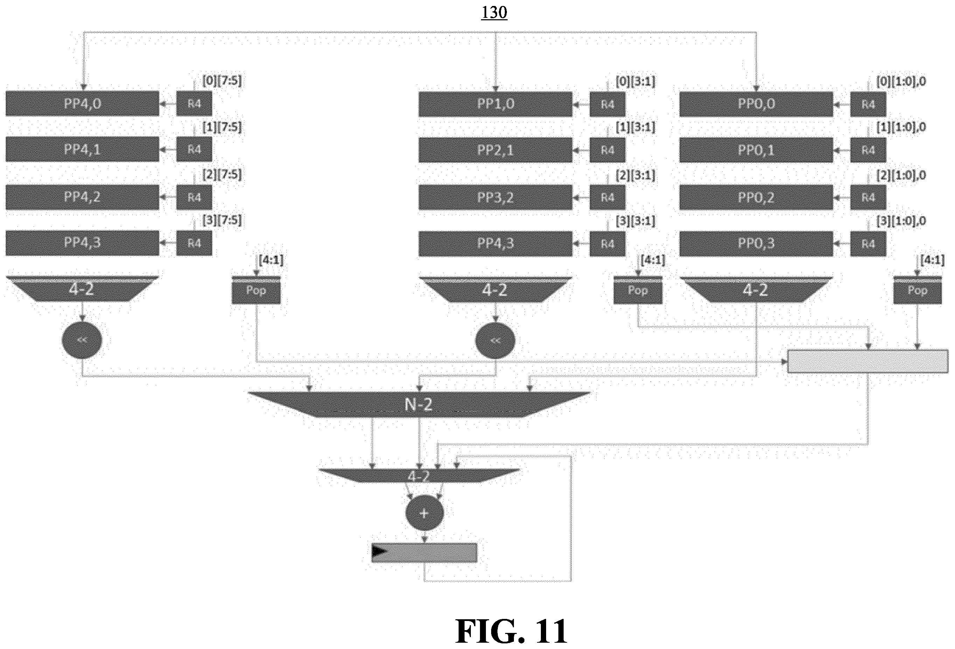

FIG. 11 shows an architecture 130 in which the outputs of several multipliers are added together efficiently. Rather than treating each multiplier separately, all of the same ranks of partial products are compressed first (e.g., initial 4-2 compression). In the illustrated example, "PP4,0" refers to partial product four, rank zero, "PP4, 1" refers to partial product four, rank one, and so forth. The ranks are summed (e.g., typically in redundant format, but the rank sums could also be added by a carry-propagate adder/CPA at the bottom of the compression of each rank). In many cases, the negative partial products will have an associated "+1" which will turn the negative partial products from 1's complement to 2's complement values. The 2's complement values are usually compressed as part of the tree. Instead, the architecture 130 performs a population ("pop") count for all of the +1s for any given rank and adds the result into the sums at the bottom. The pop counts can be added or compressed into each rank result separately, or all pop counts can be added or otherwise combined together and then added or compressed into the entire structure at a single point.

Thus, the architecture 130 and/or the architecture 120 (FIG. 10) may compress same ranks of partial products before combining the same ranks with sums of partial products of other ranks and adds ones and twos complement bits independently before the ones and twos complement bits are summed with combinations of partial products. In an embodiment, the architecture 130 also adds partial products within a plurality of arithmetic blocks in rank order.

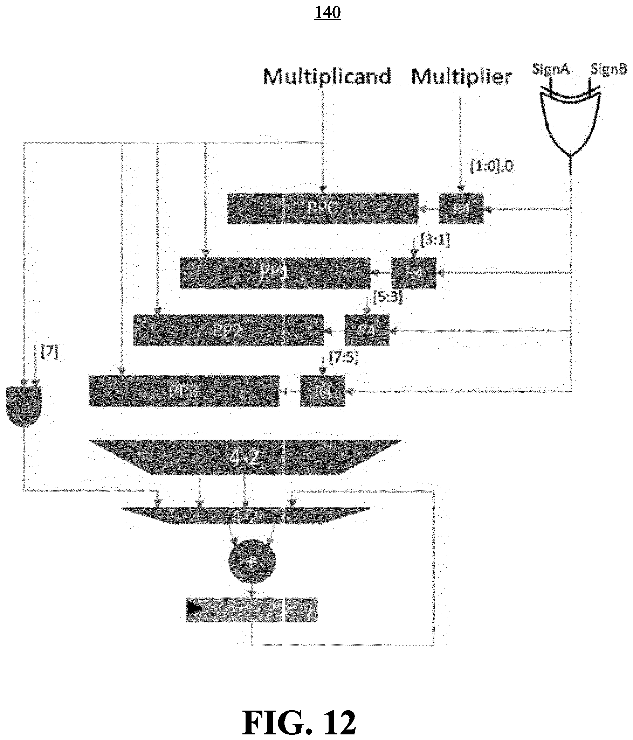

FIG. 12 shows the extension of the multiplier of the architecture 130 (FIG. 11) to an architecture 140 that performs signed magnitude multiplication, which can be extremely useful for artificial intelligence (AI) applications. In the illustrated example, a separate sign bit is used to indicate the sign of an unsigned number, such as used in IEEE 754 floating point (754-2019 - IEEE Standard for Floating-Point Arithmetic, 22 July 2019). There are two aspects of this implementation.

If the product is negative (e.g., one but not both inputs are negative), the Booth encoding for every partial product is inverted (along with the 1's to 2's bit). In addition, the multiplicand is added to tree reduction, and shifted two bits to the left of the highest Booth R4 coded partial product, but only if the most significant bit of the multiplier operand is "1" (e.g., the operand value is negative). This approach is taken because an unsigned multiplier (which is negated or not by the signed magnitude signs) is used via a mixed radix extension. All of the partial products of the multiplier are in Booth R4 format, but the uppermost partial products is in radix-2 (R2) format. Another way of looking at this condition is that the uppermost partial product is coded as a subset of Booth R4, where only the least significant bit (Isb) of the uppermost tri-bit (which is the most significant bit/msb of the penultimate tri-bit) is considered. A different way of explaining this approach is that if the msb of the multiplicand is "1", then the next Booth tribit would be "001", or (+1x multiplicand) and if the msb was "0" then the tribit would be "000" (0x multiplicand).

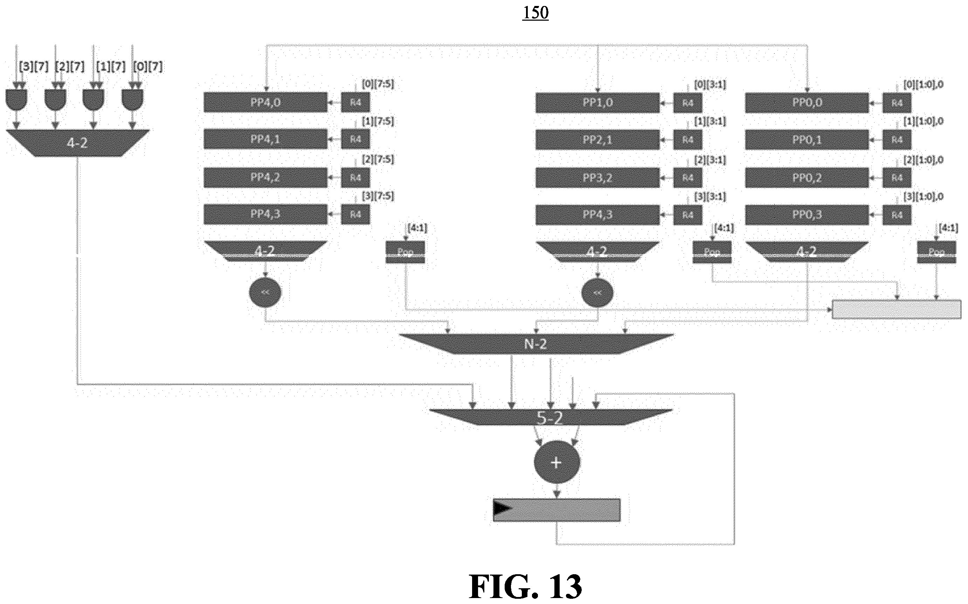

FIG. 13 shows an architecture 150 that is extended to a rank ordered multiplier array. In the illustrated example, the final partial products are all summed separately from the rest of the arrays. Embodiments support arrays of smaller multipliers, which can be extracted from the larger multipliers array. For example, two INT4 multipliers may be extracted from one INT8 multiplier. The arithmetic complexity of an INT8 multiplier is actually 4x that of a INT4 multiplier, but to access the additional two INT4 multipliers would involve 2x the number of input wires.

Thus, the architecture 150 and/or the architecture 140 (FIG. 12) may invert individual partial products to operate one or more multipliers as a signed magnitude multiplier. Additionally, the architecture 150 and/or the architecture 140 (FIG. 12) may add a single mixed radix partial product, wherein a final partial product of a lower radix operates of a subset of possibilities of a higher radix.

In addition, the architecture 150 may, for a group of multipliers, invert individual partial products to operate one or more multipliers as a signed magnitude multiplier and sum ranks of partial products. In an embodiment, the architecture 150 sums a group of partial products in a different radix separately from the ranks of partial products. In an embodiment, the group of multipliers provide unsigned multiplication. The group of multipliers may also be in an unsigned magnitude format.

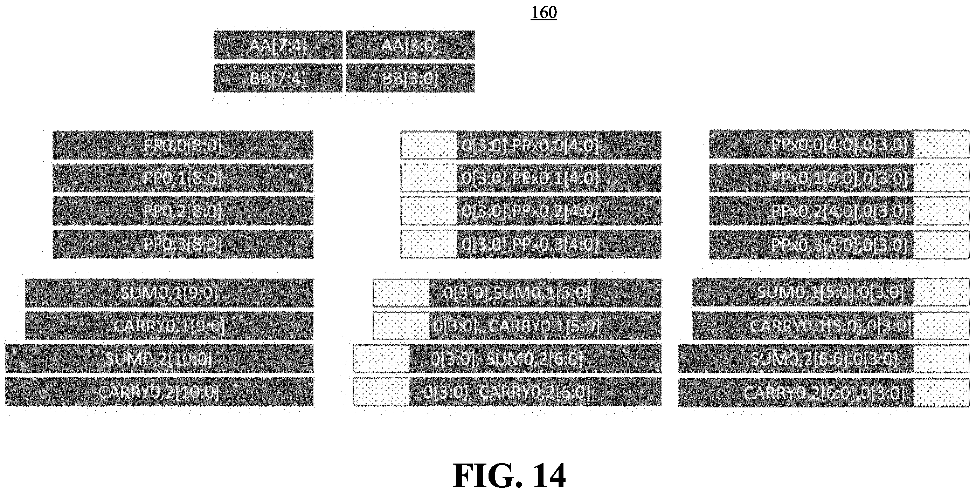

FIG. 14 demonstrates that to save power, a mapping 160 may leave the respective Isbs and msbs at zero when the INT4 operands are mapped to the INT8 partial products. Thus, the area of natural word growth is extracted from the redundant compression.

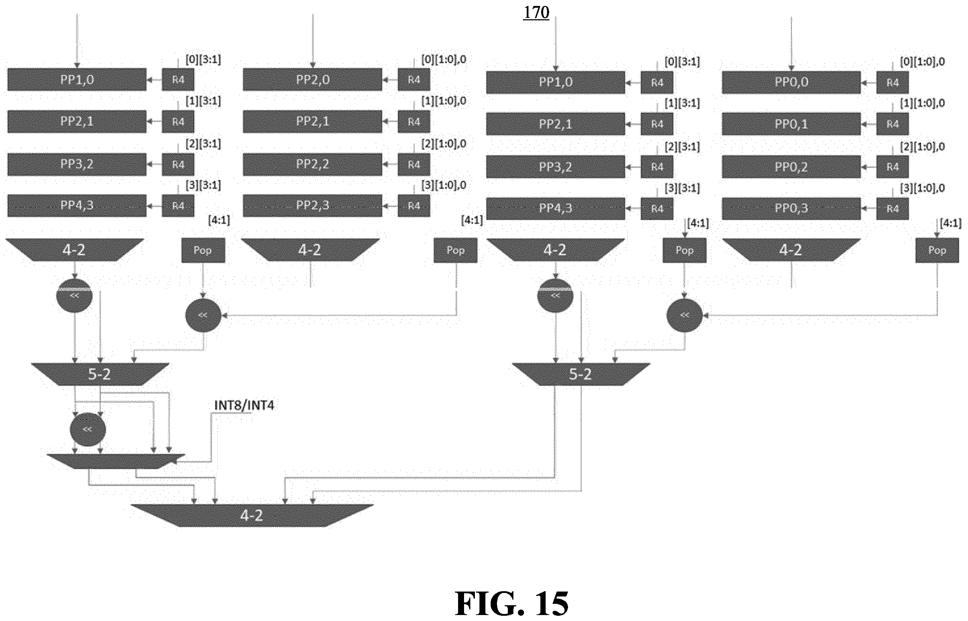

FIG. 15 shows the mapping and alignment selection for the INT8 and INT4 data paths in an architecture 170. In an embodiment, the architecture 170 zeroes out a top portion of partial products, zeroes out a bottom portion of partial products, and compresses ranks of each set of original partial products independently. The architecture 170 may also shift groups of ranks into an alignment of a smaller precision.

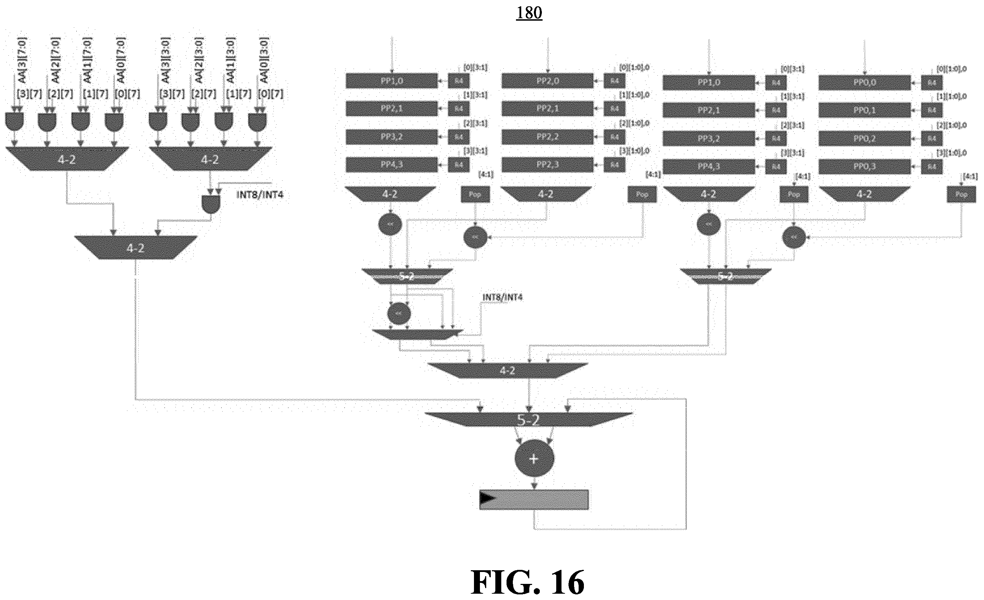

FIG. 16 shows an architecture 180 of a signed magnitude implementation for the INT4 values as a follow on from the INT8 signed magnitude calculations and the INT8/INT4 mappings. The same signed magnitude R2 extensions are used for one half of the INT4 multipliers. A second set of partial product extensions are provided for the other half of the INT4 multipliers. In the illustrated example, the partial product extensions are only 4b wide. In INT4 mode, other half will be of the same rank as the upper half of the INT8 extensions, and will be added there.

In an embodiment, the architecture 180 calculates, via multipliers, signed magnitude values in a first precision and a second precision. Additionally, the architecture 180 may calculate/determine a first set of additional partial products in the first precision and calculate/determine a second set of additional partial products in the second precision.

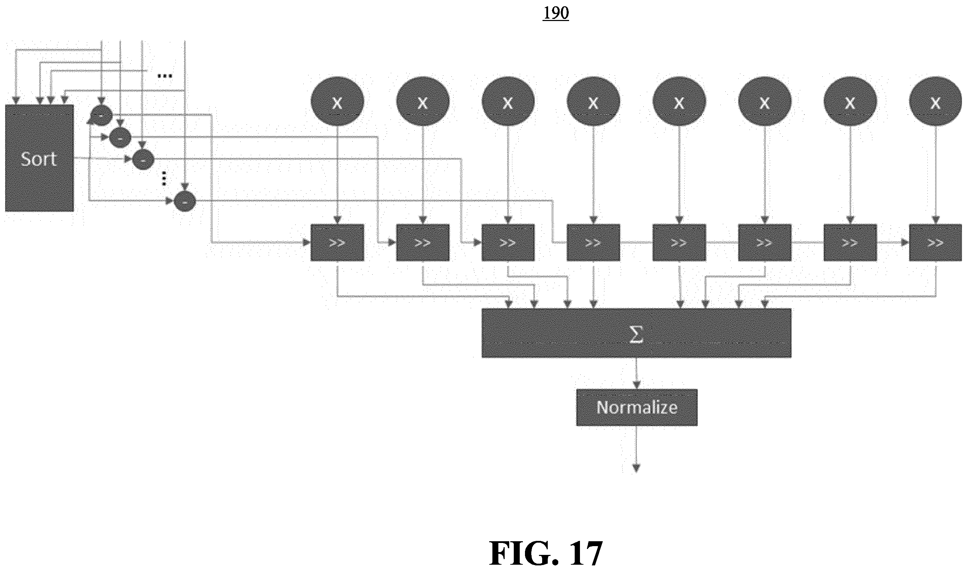

FIG. 17 shows an architecture 190 in which multiple fixed point multiplies are converted into a floating point dot product relatively inexpensively. Rather than providing a separate floating point adder for each multiplier, all multiply products are denormalized with respect to the largest product. The largest product is found by sorting all of the output exponents of each multiplier. Each exponent is then subtracted from the largest exponent, and each product is then right shifted by the difference. If the difference is larger than the output mantissa, that product can be zeroed, or alternately, used to set a "sticky" bit for that value. All of the values can then be summed together - this summation can be done efficiently by compressing in a redundant form, with a single CPA at the end. Various rounding, error handling, and exception handling functions can be added, but the basic implementation is unchanged. The illustrated architecture 190 may be used both inside a functional block, or across multiple functional blocks.

In an embodiment, the architecture 190 sorts individual exponents of floating point representations to identify a largest exponent. Additionally, the architecture 190 denormalizes multipier products to the largest exponent and sums the denormalized multiplier products to obtain a product sum. In one example, the architecture 190 normalizes the product sum to a single floating point value.

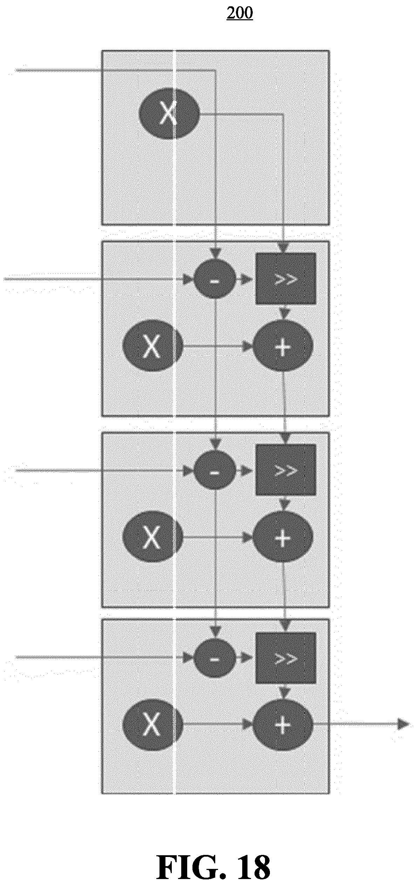

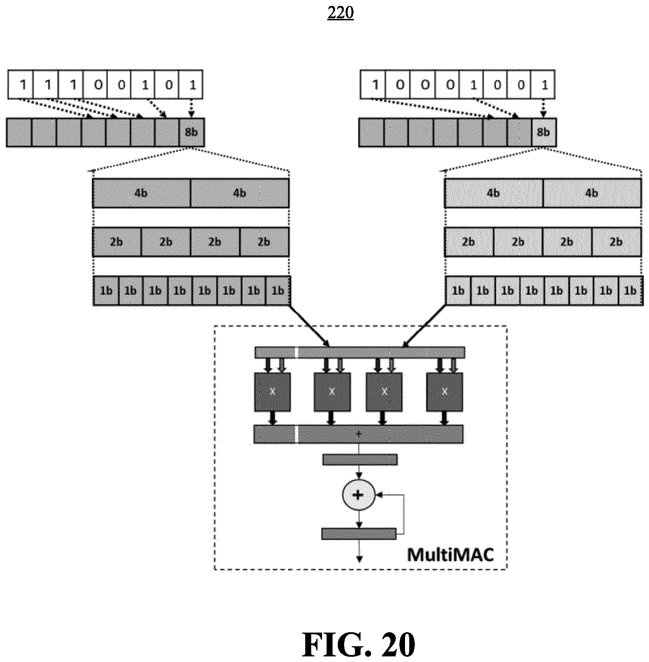

FIG. 18 demonstrates that an alternative to the architecture 190 (FIG. 20) is to extend the solution across multiple blocks, with a complete FP adder being implemented at every block as shown in an architecture 200. Here, arithmetic blocks are cascaded together. Each block takes the exponent and product of the preceding block and compares the input to an exponent of the block in question. The smaller product (e.g., mantissa) is denormalized and added to the larger mantissa. This value, along with the larger exponent, is forwarded to the next block. In an embodiment, no normalization is applied until the final block in the cascaded chain.

Sometimes, this approach will not be accurate enough. Thus, the sum at each block can be normalized (which is a larger circuit than not normalizing), but the exception handling and rounding may be bypassed (e.g., only the information is forwarded). This approach may reduce the cost of each floating point adder by 10%-20% over a typical solution (until the final block, which uses a full FP adder).

In an embodiment, the architecture 200 denormalizes, at each subsequent arithmetic block, a smaller of two values to a larger value. Additionally, the architecture 200 may sum the two values.

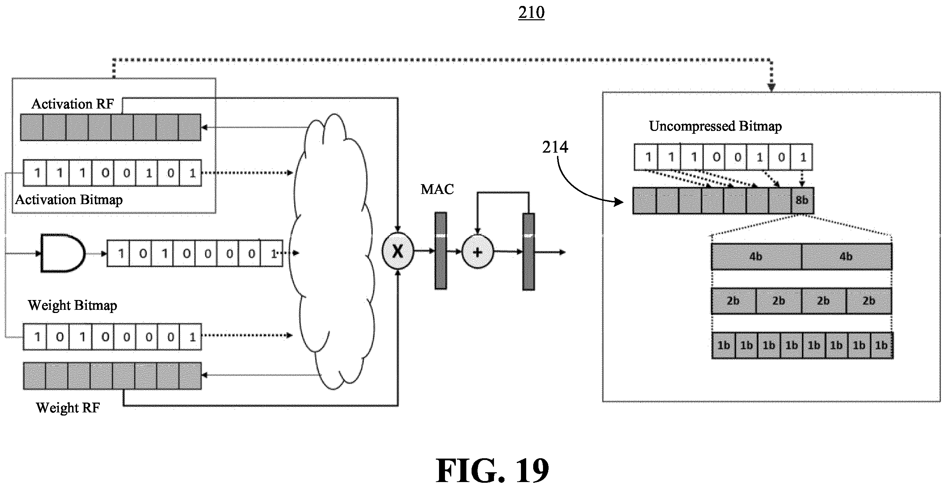

FIG. 19 shows an architecture 210 in which MultiMAC works seamlessly with the sparsity acceleration logic within a PE. In an embodiment, MultiMAC works without any additional changes because both the inner sparsity logic and the MultiMAC unit work on the assumption that IF and FL RFs store ICs sequentially, which will be accumulated within the PE.

Sparsity logic 212 (e.g., find-first sparsity logic) works with compressed data (e.g., zero-value compressed). The zero and non-zero positions in the activation and weight data are represented by a bit in the bitmap in a compressed mode. The non-zero values are compressed and kept adjacent to one another in an IF RF 214. In the single precision MAC, each byte represents one activation or filter point and is represented by one bit in the bitmap. The same logic can be kept intact and easily be applied for MultiMAC by introducing the concept of block sparsity where each bit in bitmap can either represent 1, 2, 4, or 8 ICs based on whether UINT8/INT8, UINT4/INT4, UINT2/INT2, or binary mode (BIN), respectively, are active. Only in the case when all ICs or the entire byte is 0, will a 0 be placed in the bitmap (e.g., otherwise the value will be a 1). This coarse-granular approach to maintaining sparsity information for lower precision modes may have pros and cons. For example, one advantage is that the same sparsity encoder that operates at a byte-level may be used, which decreases the overall impact on DNN accelerator area and energy. Another advantage is that the storage and processing overhead of the bitmap for each IC is also reduced at lower precisions. A downside of block sparsity, however, may be that it keeps track of sparsity at a much coarser-granularity and therefore reduces the maximum potential speedup that can be achieved through fine-granular tracking.

FIG. 20 shows an architecture 220 in which the block sparsity accumulation works within the MultiMAC PE.

### Block Sparsity Support for Existing Floating Point Operation

In addition to the integer-based MultiMAC, support may be provided for floating point execution within the PE. Although this support may involve a completely separate floating point MAC (FPMAC, e.g., separate from the MultiMAC, is not shared), the existing sparsity logic may be readily used for floating point execution.

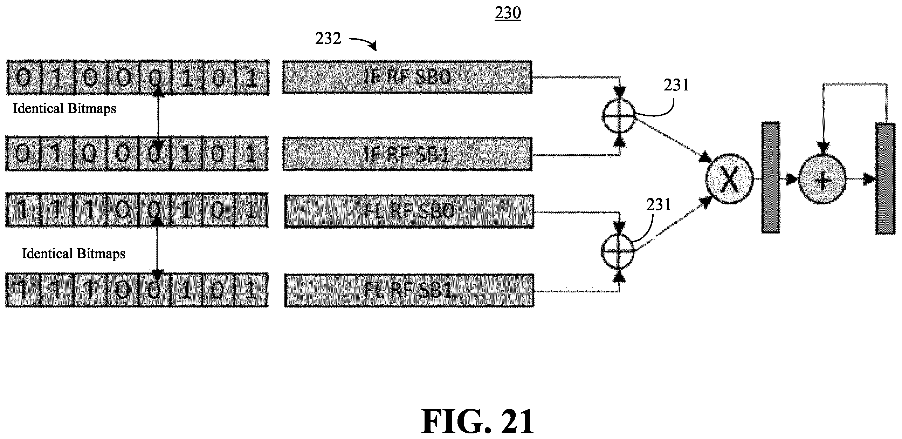

FIG. 21 shows an architecture 230 in which floating point (FP16/BF16) execution occurs within the PE. Since each RF subbank (SB) 232 has sixteen 1-byte entries and each bitmap sublane has a bit corresponding to each byte in the RF subbank, a single FP16/BF16 operand may be created by concatenating 231 1B each from two RF subbanks as shown. In an embodiment, the sparsity logic works "out of the box" without any additional changes. The architecture 230 merely ensures that during zero value suppression, the higher and lower bytes of a single BF/FP16 operand are not independently encoded. In one example, a zero is only assigned to to a byte when both the upper and the lower halves of the operand are zero (e.g., when the entire activation is zero). Such an approach, ensures that the bitmap fed in the two bitmap sublanes corresponding to the upper and lower bytes of the FP operand are exactly the same. The reuse of sparsity logic for the FP case reduces the overall overhead of sparsity.

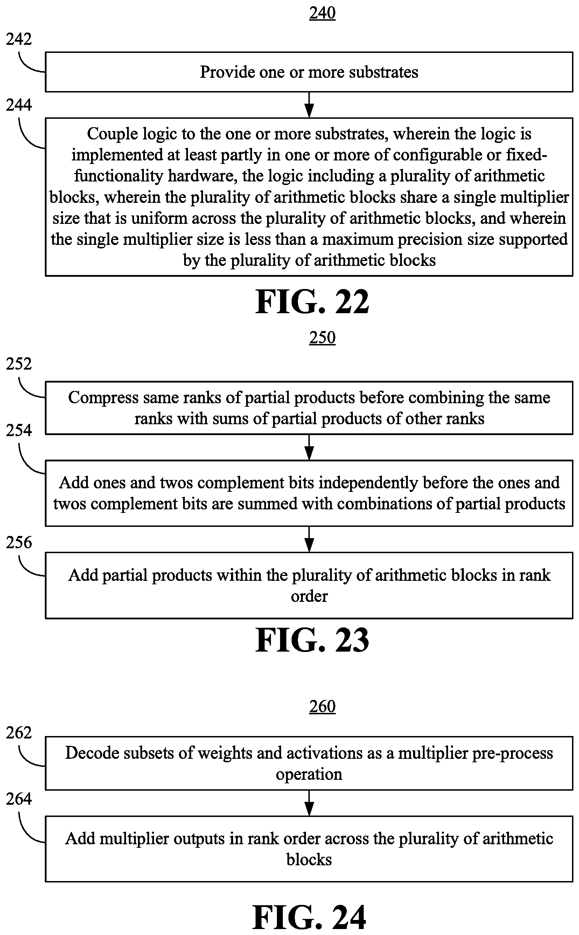

FIG. 22 shows a method 240 of fabricating a performance-enhanced MAC processor. The method 240 may generally be used to fabricate a multi-precision MAC processor such as, for example, the MAC processor 40 (FIG. 1), already discussed. More particularly, the method 240 may be implemented in one or more modules as a set of logic instructions stored in a machine- or computer-readable storage medium such as random access memory (RAM), read only memory (ROM), programmable ROM (PROM), firmware, flash memory, etc., in configurable logic such as, for example, programmable logic arrays (PLAs), field programmable gate arrays (FPGAs), complex programmable logic devices (CPLDs), in fixed-functionality logic hardware using circuit technology such as, for example, application specific integrated circuit (ASIC), complementary metal oxide semiconductor (CMOS) or transistor-transistor logic (TTL) technology, or any combination thereof. The method 240 may also be implemented via suitable semiconductor processes such as, for example, deposition, cutting and/or etching techniques.

For example, computer program code to carry out operations shown in the method 240 may be written in any combination of one or more programming languages, including an object oriented programming language such as JAVA, SMALLTALK, C++ or the like and conventional procedural programming languages, such as the "C" programming language or similar programming languages. Additionally, logic instructions might include assembler instructions, instruction set architecture (ISA) instructions, machine instructions, machine dependent instructions, microcode, state-setting data, configuration data for integrated circuitry, state information that personalizes electronic circuitry and/or other structural components that are native to hardware (e.g., host processor, central processing unit/CPU, microcontroller, etc.).

Illustrated processing block 242 provides one or more substrates such as, for example, silicon, sapphire, gallium arsenide, etc. Processing block 244 couples logic (e.g., transistor array and other integrated circuit/IC components) to the substrate(s). In the illustrated example, the logic is implemented at least partly in one or more of configurable or fixed-functionality hardware. Moreover, the logic includes a plurality of arithmetic blocks (e.g., ALUs), wherein the plurality of arithmetic blocks share a single multiplier sized that is uniform across the plurality of arithmetic blocks. Additionally, the single multiplier size is less than the maximum precision size supported by the plurality of arithmetic blocks. In an embodiment, the maximum precision size is eight bits and the single multiplier size is five bits. In one example, block 244 includes arranging sparsity information for activations and weights in accordance with a bitmap format that is common to multiple precisions. The method 240 therefore enhances performance at least to the extent that single multiplier size renders the MAC processor more area and/or energy efficient.

FIG. 23 shows another method 250 of operating a performance-enhanced MAC processor such as, for example, the multi-precision MAC processor 40 (FIG. 1), already discussed. The method 250 may generally be implemented in a logic architecture such as, for example, the architecture 120 (FIG. 10) and/or the architecture 130 (FIG. 11), already discussed. More particularly, the method 250 may be implemented in one or more modules as a set of logic instructions stored in a machine- or computer-readable storage medium such as RAM, ROM, PROM, firmware, flash memory, etc., in configurable logic such as, for example, PLAs, FPGAs, CPLDs, in fixed-functionality logic hardware using circuit technology such as, for example, ASIC, CMOS or TTL technology, or any combination thereof.

Illustrated processing block 252 compresses same ranks of partial products before combining the same ranks with sums of partial products of other ranks, wherein block 254 adds ones and twos complement bits independently before the ones and twos complement bits are summed with combinations of partial products. In an embodiment, block 256 adds partial products within a plurality of arithmetic blocks in rank order.

FIG. 24 shows another method 260 of operating a performance-enhanced MAC processor such as, for example, the multi-precision MAC processor 40 (FIG. 1), already discussed. The method 260 may generally be implemented in a data path such as, for example, the enhanced data path 94 (FIG. 6) and/or the MultiMAC unit 86 (FIG. 8), already discussed. More particularly, the method 260 may be implemented in one or more modules as a set of logic instructions stored in a machine- or computer-readable storage medium such as RAM, ROM, PROM, firmware, flash memory, etc., in configurable logic such as, for example, PLAs, FPGAs, CPLDs, in fixed-functionality logic hardware using circuit technology such as, for example, ASIC, CMOS or TTL technology, or any combination thereof.

Illustrated processing block 262 decodes subsets of weights and activations as a multiplier pre-process operation. Additionally, block 264 adds multiplier outputs in rank order across a plurality of arithmetic blocks.

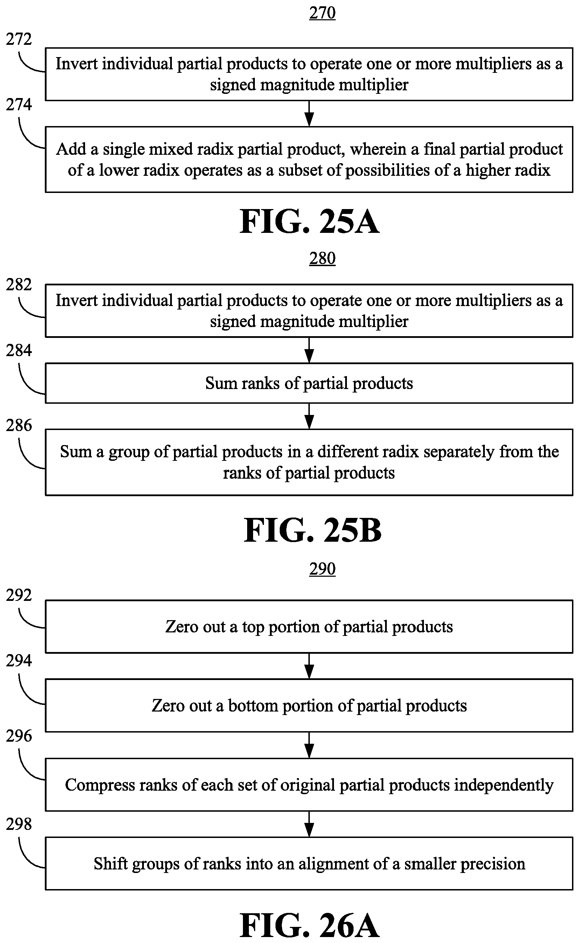

FIG. 25A shows another method 270 of operating a performance-enhanced MAC processor such as, for example, the multi-precision MAC processor 40 (FIG. 1), already discussed. The method 270 may generally be implemented in a logic architecture such as, for example, the architecture 140 (FIG. 12) and/or the architecture 150 (FIG. 13), already discussed. More particularly, the method 270 may be implemented in one or more modules as a set of logic instructions stored in a machine- or computer-readable storage medium such as RAM, ROM, PROM, firmware, flash memory, etc., in configurable logic such as, for example, PLAs, FPGAs, CPLDs, in fixed-functionality logic hardware using circuit technology such as, for example, ASIC, CMOS or TTL technology, or any combination thereof.

Illustrated processing block 272 inverts individual partial products to operate one or more multipliers as a signed magnitude multiplier. Additionally, block 274 may add a single mixed radix partial product, wherein a final partial product of a lower radix operates of a subset of possibilities of a higher radix.

FIG. 25B shows another method 280 of operating a performance-enhanced MAC processor such as, for example, the multi-precision MAC processor 40 (FIG. 1), already discussed. The method 280 may generally be implemented, for a group of multipliers, in a logic architecture such as, for example, the architecture 150 (FIG. 13), already discussed. More particularly, the method 280 may be implemented in one or more modules as a set of logic instructions stored in a machine- or computer-readable storage medium such as RAM, ROM, PROM, firmware, flash memory, etc., in configurable logic such as, for example, PLAs, FPGAs, CPLDs, in fixed-functionality logic hardware using circuit technology such as, for example, ASIC, CMOS or TTL technology, or any combination thereof.

Illustrated processing block 282 inverts individual partial products to operate one or more multipliers as a signed magnitude multiplier, wherein block 284 sums ranks of partial products. Additionally, block 286 sums a group of partial products in a different radix separately from the ranks of partial products. In an embodiment, the group of multipliers provide unsigned multiplication. The group of multipliers may also be in an unsigned magnitude format.

FIG. 26A shows another method 290 of operating a performance-enhanced MAC processor such as, for example, the multi-precision MAC processor 40 (FIG. 1), already discussed. The method 290 may generally be implemented in a logic architecture such as, for example, the architecture 170 (FIG. 15), already discussed. More particularly, the method 290 may be implemented in one or more modules as a set of logic instructions stored in a machine- or computer-readable storage medium such as RAM, ROM, PROM, firmware, flash memory, etc., in configurable logic such as, for example, PLAs, FPGAs, CPLDs, in fixed-functionality logic hardware using circuit technology such as, for example, ASIC, CMOS or TTL technology, or any combination thereof.

Illustrated processing block 292 zeroes out a top portion of partial products, wherein block 294 zeroes out a bottom portion of partial products. In one example, block 296 compresses ranks of each set of original partial products independently. Block 298 may shift groups of ranks into an alignment of a smaller precision.

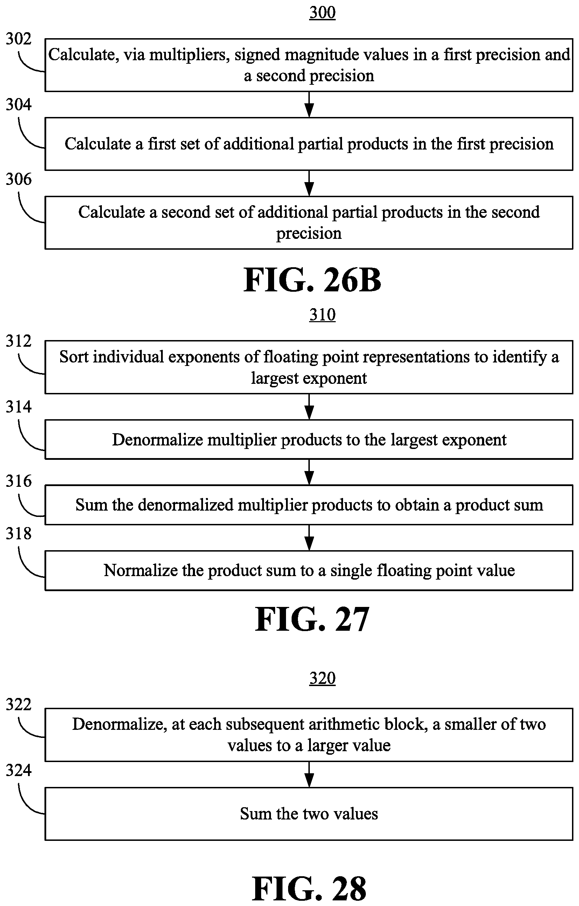

FIG. 26B shows another method 300 of operating a performance-enhanced MAC processor such as, for example, the multi-precision MAC processor 40 (FIG. 1), already discussed. The method 300 may generally be implemented in a logic architecture such as, for example, the architecture 180 (FIG. 16), already discussed. More particularly, the method 300 may be implemented in one or more modules as a set of logic instructions stored in a machine- or computer-readable storage medium such as RAM, ROM, PROM, firmware, flash memory, etc., in configurable logic such as, for example, PLAs, FPGAs, CPLDs, in fixed-functionality logic hardware using circuit technology such as, for example, ASIC, CMOS or TTL technology, or any combination thereof.

Illustrated processing block 302 calculates, via multipliers, signed magnitude values in a first precision and a second precision. Additionally, block 304 calculates/determines a first set of additional partial products in the first precision, wherein block 306 calculates/determines a second set of additional partial products in the second precision.

FIG. 27 shows another method 310 of operating a performance-enhanced MAC processor such as, for example, the multi-precision MAC processor 40 (FIG. 1), already discussed. The method 310 may generally be implemented in a logic architecture such as, for example, the architecture 190 (FIG. 17), already discussed. More particularly, the method 310 may be implemented in one or more modules as a set of logic instructions stored in a machine- or computer-readable storage medium such as RAM, ROM, PROM, firmware, flash memory, etc., in configurable logic such as, for example, PLAs, FPGAs, CPLDs, in fixed-functionality logic hardware using circuit technology such as, for example, ASIC, CMOS or TTL technology, or any combination thereof.

Illustrated processing block 312 sorts individual exponents of floating point representations to identify a largest exponent. Additionally, block 314 denormalizes multiplier products to the largest exponent, wherein block 316 sums the denormalized multiplier products to obtain a product sum. In an embodiment, block 318 normalizes the product sum to a single floating point value.

FIG. 28 shows another method 320 of operating a performance-enhanced MAC processor such as, for example, the multi-precision MAC processor 40 (FIG. 1), already discussed. The method 320 may generally be implemented in a logic architecture such as, for example, the architecture 200 (FIG. 18), already discussed. More particularly, the method 320 may be implemented in one or more modules as a set of logic instructions stored in a machine- or computer-readable storage medium such as RAM, ROM, PROM, firmware, flash memory, etc., in configurable logic such as, for example, PLAs, FPGAs, CPLDs, in fixed-functionality logic hardware using circuit technology such as, for example, ASIC, CMOS or TTL technology, or any combination thereof.

Illustrated processing block 322 denormalizes, at each subsequent arithmetic block, a smaller of two values to a larger value. Additionally, block 324 sums the two values.

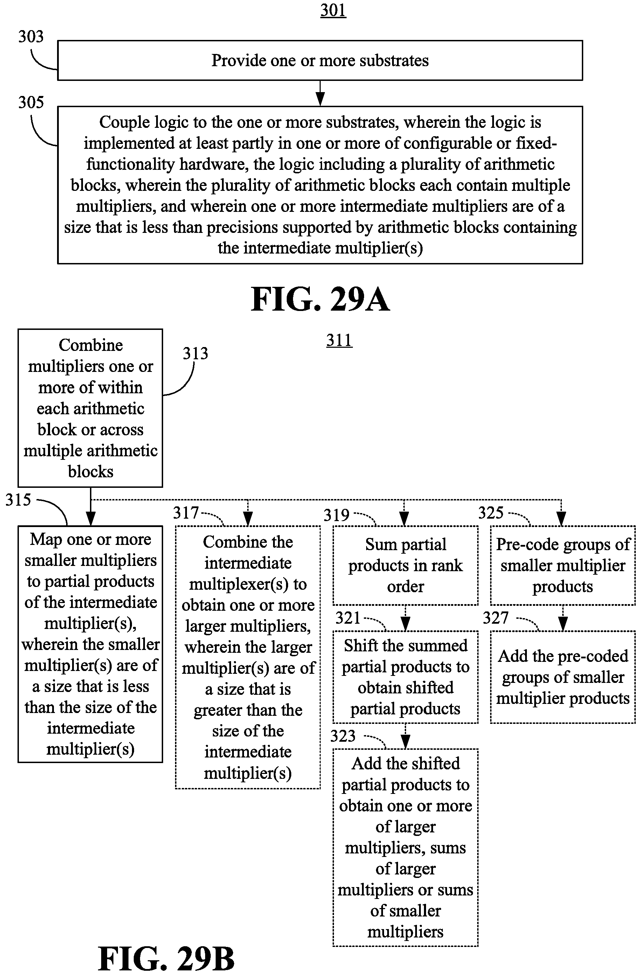

FIG. 29A shows a method 301 of fabricating a performance-enhanced MAC processor. The method 301 may generally be used to fabricate a multi-precision MAC processor such as, for example, the MAC processor 40 (FIG. 1), already discussed. More particularly, the method 301 may be implemented in one or more modules as a set of logic instructions stored in a machine- or computer-readable storage medium such as such as RAM, ROM, PROM, firmware, flash memory, etc., in configurable logic such as, for example, PLAs, FPGAs, CPLDs, in fixed-functionality logic hardware using circuit technology such as, for example, ASIC, CMOS or TTL technology, or any combination thereof. The method 301 may also be implemented via suitable semiconductor processes such as, for example, deposition, cutting and/or etching techniques.

Illustrated processing block 303 provides one or more substrates such as, for example, silicon, sapphire, gallium arsenide, etc. Processing block 305 couples logic (e.g., transistor array and other integrated circuit/IC components) to the substrate(s). In the illustrated example, the logic is implemented at least partly in one or more of configurable or fixed-functionality hardware. Moreover, the logic includes a plurality of arithmetic blocks (e.g., ALUs), wherein the plurality of arithmetic blocks each contain multiple multipliers. Moreover, one or more intermediate multipliers may be of a size that is less than precisions supported by arithmetic blocks containing the one or more intermediate multipliers.

FIG. 29B shows another method 311 of operating a performance-enhanced MAC processor such as, for example, the multi-precision MAC processor 40 (FIG. 1), already discussed. The method 311 may generally be implemented in a logic architecture such as, for example, the architecture 200 (FIG. 18), already discussed. More particularly, the method 311 may be implemented in one or more modules as a set of logic instructions stored in a machine- or computer-readable storage medium such as RAM, ROM, PROM, firmware, flash memory, etc., in configurable logic such as, for example, PLAs, FPGAs, CPLDs, in fixed-functionality logic hardware using circuit technology such as, for example, ASIC, CMOS or TTL technology, or any combination thereof.

Illustrated processing block 313 combines multipliers one or more of 1) within each arithmetic block, or 2) across multiple arithmetic blocks. Additionally, block 315 may map one or more smaller multipliers to partial products of the intermediate multiplier(s), wherein the smaller multiplier(s) are of a size that is less than the size of the intermediate multiplier(s). In addition, block 317 may combine the intermediate multiplier(s) to obtain one or more larger multipliers, wherein the larger multiplier(s) are of a size that is greater than the size of the intermediate multiplier(s). In an embodiment, block 319 sums partial products in rank order, wherein block 321 shifts the summed partial products to obtain shifted partial products. In such a case, block 323 adds the shifted partial products to obtain one or more of larger multipliers, sums of larger multipliers or sums of smaller multipliers. Moreover, block 325 may pre-code groups of smaller multiplier products, wherein block 327 adds the pre-coded groups of smaller multiplier products.

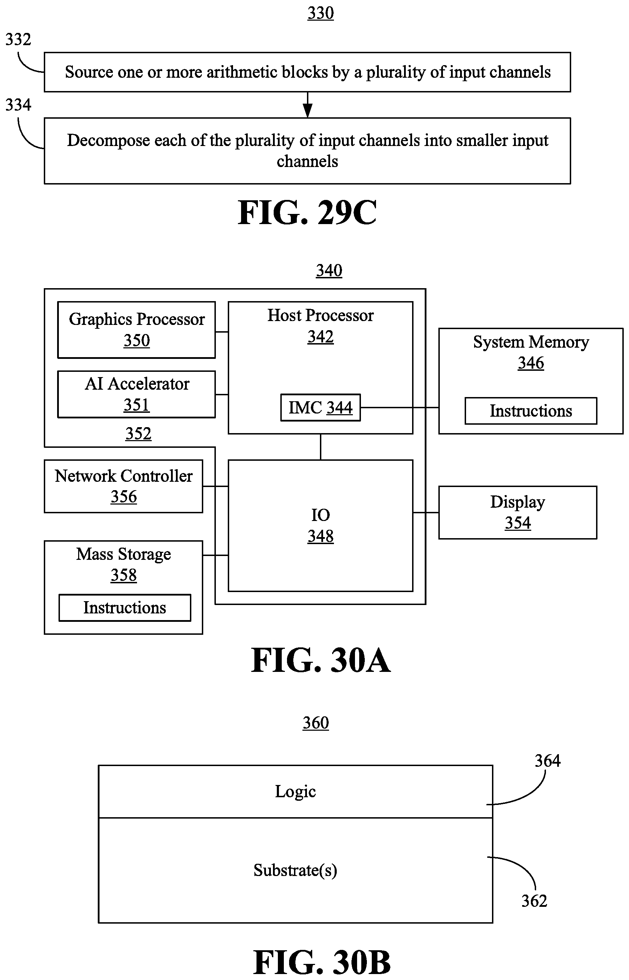

FIG. 29C shows another method 330 of operating a performance-enhanced MAC processor such as, for example, the multi-precision MAC processor 40 (FIG. 1), already discussed. The method 330 may generally be implemented in a logic architecture such as, for example, the architecture 200 (FIG. 18), already discussed. More particularly, the method 330 may be implemented in one or more modules as a set of logic instructions stored in a machine- or computer-readable storage medium such as RAM, ROM, PROM, firmware, flash memory, etc., in configurable logic such as, for example, PLAs, FPGAs, CPLDs, in fixed-functionality logic hardware using circuit technology such as, for example, ASIC, CMOS or TTL technology, or any combination thereof.

Illustrated processing block 332 sources one or more arithmetic blocks by a plurality of input channels. In an embodiment, block 334 decomposes each of the plurality of input channels into smaller input channels.

Turning now to FIG. 30A, a performance-enhanced computing system 340 is shown. The system 340 may generally be part of an electronic device/platform having computing functionality (e.g., personal digital assistant/PDA, notebook computer, tablet computer, convertible tablet, server), communications functionality (e.g., smart phone), imaging functionality (e.g., camera, camcorder), media playing functionality (e.g., smart television/TV), wearable functionality (e.g., watch, eyewear, headwear, footwear, jewelry), vehicular functionality (e.g., car, truck, motorcycle), robotic functionality (e.g., autonomous robot), Internet of Things (IoT) functionality, etc., or any combination thereof. In the illustrated example, the system 340 includes a host processor 342 (e.g., central processing unit/CPU) having an integrated memory controller (IMC) 344 that is coupled to a system memory 346.

The illustrated system 340 also includes an input output (IO) module 348 implemented together with the host processor 342, an Al accelerator 351 (e.g., DNN processing engine) and a graphics processor 350 (e.g., graphics processing unit/GPU) on a semiconductor die 352 as a system on chip (SoC). The illustrated IO module 348 communicates with, for example, a display 354 (e.g., touch screen, liquid crystal display/LCD, light emitting diode/LED display), a network controller 356 (e.g., wired and/or wireless), and mass storage 358 (e.g., hard disk drive/HDD, optical disk, solid state drive/SSD, flash memory).

In an embodiment, the Al accelerator 351 includes a multi-precision MAC processor such as, for example, the MAC processor 40 (FIG. 1), already discussed. Thus, the Al accelerator 351 includes logic (e.g., logic instructions, configurable logic, fixed-functionality hardware logic, etc., or any combination thereof) having a plurality of arithmetic blocks to perform one or more aspects of the method 240 (FIG. 22), the method 250 (FIG. 23), the method 260 (FIG. 24), the method 270 (FIG. 25A), the method 280 (FIG. 25B), the method 290 (FIG. 26A), the method 300 (FIG. 26B), the method 310 (FIG. 27) and/or the method 320 (FIG. 28), already discussed. In an embodiment, the plurality of arithmetic blocks share a single multiplier size that is uniform across the arithmetic blocks, wherein the single multiplier size is less than a maximum precision size supported by the arithmetic blocks. The computing system is therefore considered performance-enhanced at least to the extent that single multiplier size renders the MAC processor more area and/or energy efficient.

FIG. 30B shows a semiconductor package apparatus 360. The illustrated apparatus 360 includes one or more substrates 362 (e.g., silicon, sapphire, gallium arsenide) and logic 364 (e.g., transistor array and other integrated circuit/IC components) coupled to the substrate(s) 362. The logic 364 may be implemented at least partly in configurable logic or fixed-functionality logic hardware. In one example, the logic 364 implements one or more aspects of the method 240 (FIG. 22), the method 250 (FIG. 23), the method 260 (FIG. 24), the method 270 (FIG. 25A), the method 280 (FIG. 25B), the method 290 (FIG. 26A), the method 300 (FIG. 26B), the method 310 (FIG. 27) and/or the method 320 (FIG. 28), already discussed. In an embodiment, the logic 364 includes a plurality of arithmetic blocks that share a single multiplier size, wherein the single multiplier size is uniform across the arithmetic blocks, and wherein the single multiplier size is less than a maximum precision size supported by the arithmetic blocks. The apparatus 360 is therefore considered performance-enhanced at least to the extent that single multiplier size renders the MAC processor more area and/or energy efficient.

In one example, the logic 364 includes transistor channel regions that are positioned (e.g., embedded) within the substrate(s) 362. Thus, the interface between the logic 364 and the substrate(s) 172 may not be an abrupt junction. The logic 364 may also be considered to include an epitaxial layer that is grown on an initial wafer of the substrate(s) 362.

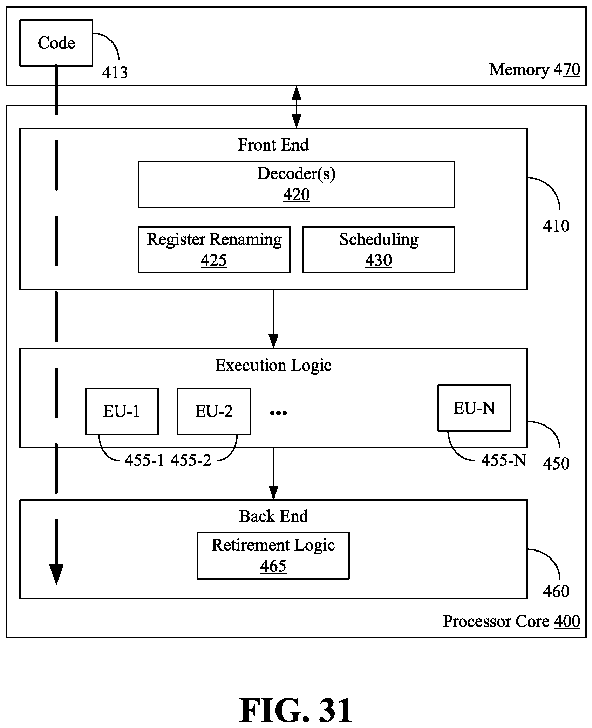

FIG. 31 illustrates a processor core 400 according to one embodiment. The processor core 400 may be the core for any type of processor, such as a micro-processor, an embedded processor, a digital signal processor (DSP), a network processor, or other device to execute code. Although only one processor core 400 is illustrated in FIG. 31, a processing element may alternatively include more than one of the processor core 400 illustrated in FIG. 31. The processor core 400 may be a single-threaded core or, for at least one embodiment, the processor core 400 may be multithreaded in that it may include more than one hardware thread context (or "logical processor") per core.

FIG. 31 also illustrates a memory 470 coupled to the processor core 400. The memory 470 may be any of a wide variety of memories (including various layers of memory hierarchy) as are known or otherwise available to those of skill in the art. The memory 470 may include one or more code 413 instruction(s) to be executed by the processor core 400, wherein the code 413 may implement one or more aspects of the method 240 (FIG. 22), the method 250 (FIG. 23), the method 260 (FIG. 24), the method 270 (FIG. 25A), the method 280 (FIG. 25B), the method 290 (FIG. 26A), the method 300 (FIG. 26B), the method 310 (FIG. 27) and/or the method 320 (FIG. 28), already discussed. The processor core 400 follows a program sequence of instructions indicated by the code 413. Each instruction may enter a front end portion 410 and be processed by one or more decoders 420. The decoder 420 may generate as its output a micro operation such as a fixed width micro operation in a predefined format, or may generate other instructions, microinstructions, or control signals which reflect the original code instruction. The illustrated front end portion 410 also includes register renaming logic 425 and scheduling logic 430, which generally allocate resources and queue the operation corresponding to the convert instruction for execution.

The processor core 400 is shown including execution logic 450 having a set of execution units 455-1 through 455-N. Some embodiments may include a number of execution units dedicated to specific functions or sets of functions. Other embodiments may include only one execution unit or one execution unit that can perform a particular function. The illustrated execution logic 450 performs the operations specified by code instructions.

After completion of execution of the operations specified by the code instructions, back end logic 460 retires the instructions of the code 413. In one embodiment, the processor core 400 allows out of order execution but requires in order retirement of instructions. Retirement logic 465 may take a variety of forms as known to those of skill in the art (e.g., re-order buffers or the like). In this manner, the processor core 400 is transformed during execution of the code 413, at least in terms of the output generated by the decoder, the hardware registers and tables utilized by the register renaming logic 425, and any registers (not shown) modified by the execution logic 450.

Although not illustrated in FIG. 31, a processing element may include other elements on chip with the processor core 400. For example, a processing element may include memory control logic along with the processor core 400. The processing element may include I/O control logic and/or may include I/O control logic integrated with memory control logic. The processing element may also include one or more caches.

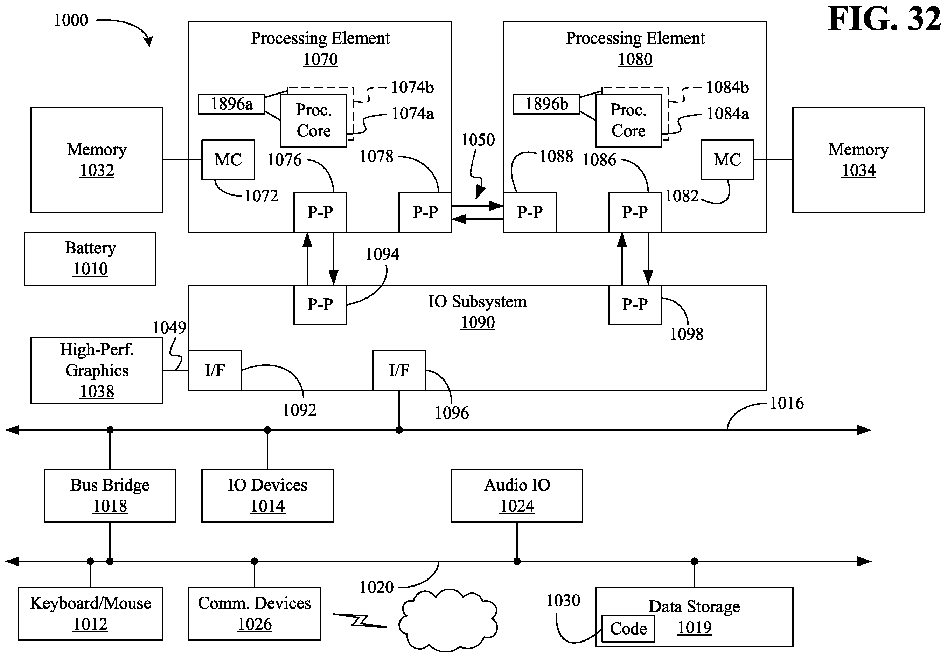

Referring now to FIG. 32, shown is a block diagram of a computing system 1000 embodiment in accordance with an embodiment. Shown in FIG. 32 is a multiprocessor system 1000 that includes a first processing element 1070 and a second processing element 1080. While two processing elements 1070 and 1080 are shown, it is to be understood that an embodiment of the system 1000 may also include only one such processing element.

The system 1000 is illustrated as a point-to-point interconnect system, wherein the first processing element 1070 and the second processing element 1080 are coupled via a point-to-point interconnect 1050. It should be understood that any or all of the interconnects illustrated in FIG. 32 may be implemented as a multi-drop bus rather than point-to-point interconnect.

As shown in FIG. 32, each of processing elements 1070 and 1080 may be multicore processors, including first and second processor cores (i.e., processor cores 1074a and 1074b and processor cores 1084a and 1084b). Such cores 1074a, 1074b, 1084a, 1084b may be configured to execute instruction code in a manner similar to that discussed above in connection with FIG. 31.

Each processing element 1070, 1080 may include at least one shared cache 1896a, 1896b. The shared cache 1896a, 1896b may store data (e.g., instructions) that are utilized by one or more components of the processor, such as the cores 1074a, 1074b and 1084a, 1084b, respectively. For example, the shared cache 1896a, 1896b may locally cache data stored in a memory 1032, 1034 for faster access by components of the processor. In one or more embodiments, the shared cache 1896a, 1896b may include one or more mid-level caches, such as level 2 (L2), level 3 (L3), level 4 (L4), or other levels of cache, a last level cache (LLC), and/or combinations thereof.

While shown with only two processing elements 1070, 1080, it is to be understood that the scope of the embodiments are not so limited. In other embodiments, one or more additional processing elements may be present in a given processor. Alternatively, one or more of processing elements 1070, 1080 may be an element other than a processor, such as an accelerator or a field programmable gate array. For example, additional processing element(s) may include additional processors(s) that are the same as a first processor 1070, additional processor(s) that are heterogeneous or asymmetric to processor a first processor 1070, accelerators (such as, e.g., graphics accelerators or digital signal processing (DSP) units), field programmable gate arrays, or any other processing element. There can be a variety of differences between the processing elements 1070, 1080 in terms of a spectrum of metrics of merit including architectural, micro architectural, thermal, power consumption characteristics, and the like. These differences may effectively manifest themselves as asymmetry and heterogeneity amongst the processing elements 1070, 1080. For at least one embodiment, the various processing elements 1070, 1080 may reside in the same die package.

The first processing element 1070 may further include memory controller logic (MC) 1072 and point-to-point (P-P) interfaces 1076 and 1078. Similarly, the second processing element 1080 may include a MC 1082 and P-P interfaces 1086 and 1088. As shown in FIG. 32, MC's 1072 and 1082 couple the processors to respective memories, namely a memory 1032 and a memory 1034, which may be portions of main memory locally attached to the respective processors. While the MC 1072 and 1082 is illustrated as integrated into the processing elements 1070, 1080, for alternative embodiments the MC logic may be discrete logic outside the processing elements 1070, 1080 rather than integrated therein.

The first processing element 1070 and the second processing element 1080 may be coupled to an I/O subsystem 1090 via P-P interconnects 1076 1086, respectively. As shown in FIG. 32, the I/O subsystem 1090 includes P-P interfaces 1094 and 1098. Furthermore, I/O subsystem 1090 includes an interface 1092 to couple I/O subsystem 1090 with a high performance graphics engine 1038. In one embodiment, bus 1049 may be used to couple the graphics engine 1038 to the I/O subsystem 1090. Alternately, a point-to-point interconnect may couple these components.

In turn, I/O subsystem 1090 may be coupled to a first bus 1016 via an interface 1096. In one embodiment, the first bus 1016 may be a Peripheral Component Interconnect (PCI) bus, or a bus such as a PCI Express bus or another third generation I/O interconnect bus, although the scope of the embodiments are not so limited.

As shown in FIG. 32, various I/O devices 1014 (e.g., biometric scanners, speakers, cameras, sensors) may be coupled to the first bus 1016, along with a bus bridge 1018 which may couple the first bus 1016 to a second bus 1020. In one embodiment, the second bus 1020 may be a low pin count (LPC) bus. Various devices may be coupled to the second bus 1020 including, for example, a keyboard/mouse 1012, communication device(s) 1026, and a data storage unit 1019 such as a disk drive or other mass storage device which may include code 1030, in one embodiment. The illustrated code 1030 may implement one or more aspects of the method 240 (FIG. 22), the method 250 (FIG. 23), the method 260 (FIG. 24), the method 270 (FIG. 25A), the method 280 (FIG. 25B), the method 290 (FIG. 26A), the method 300 (FIG. 26B), the method 310 (FIG. 27) and/or the method 320 (FIG. 28), already discussed. Further, an audio I/O 1024 may be coupled to second bus 1020 and a battery 1010 may supply power to the computing system 1000.

Note that other embodiments are contemplated. For example, instead of the point-to-point architecture of FIG. 32, a system may implement a multi-drop bus or another such communication topology. Also, the elements of FIG. 32 may alternatively be partitioned using more or fewer integrated chips than shown in FIG. 32.

Technology described herein therefore delivers high performance at a fraction of the area and energy costs in DNN accelerators, which may be key to efficient edge inference for various Al applications including imaging, video, and speech applications. The technology also provides a design that is high performance, has low silicon footprint and energy consumption, and can provide a unique edge in terms of better performance, and taking advantages of transistor scaling.

Embodiments are applicable for use with all types of semiconductor integrated circuit ("IC") chips. Examples of these IC chips include but are not limited to processors, controllers, chipset components, programmable logic arrays (PLAs), memory chips, network chips, systems on chip (SoCs), SSD/NAND controller ASICs, and the like. In addition, in some of the drawings, signal conductor lines are represented with lines. Some may be different, to indicate more constituent signal paths, have a number label, to indicate a number of constituent signal paths, and/or have arrows at one or more ends, to indicate primary information flow direction. This, however, should not be construed in a limiting manner. Rather, such added detail may be used in connection with one or more exemplary embodiments to facilitate easier understanding of a circuit. Any represented signal lines, whether or not having additional information, may actually comprise one or more signals that may travel in multiple directions and may be implemented with any suitable type of signal scheme, e.g., digital or analog lines implemented with differential pairs, optical fiber lines, and/or single-ended lines.

Example sizes/models/values/ranges may have been given, although embodiments are not limited to the same. As manufacturing techniques (e.g., photolithography) mature over time, it is expected that devices of smaller size could be manufactured. In addition, well known power/ground connections to IC chips and other components may or may not be shown within the figures, for simplicity of illustration and discussion, and so as not to obscure certain aspects of the embodiments. Further, arrangements may be shown in block diagram form in order to avoid obscuring embodiments, and also in view of the fact that specifics with respect to implementation of such block diagram arrangements are highly dependent upon the computing system within which the embodiment is to be implemented, i.e., such specifics should be well within purview of one skilled in the art. Where specific details (e.g., circuits) are set forth in order to describe example embodiments, it should be apparent to one skilled in the art that embodiments can be practiced without, or with variation of, these specific details. The description is thus to be regarded as illustrative instead of limiting.

The term "coupled" may be used herein to refer to any type of relationship, direct or indirect, between the components in question, and may apply to electrical, mechanical, fluid, optical, electromagnetic, electromechanical or other connections. In addition, the terms "first", "second", etc. may be used herein only to facilitate discussion, and carry no particular temporal or chronological significance unless otherwise indicated.

As used in this application and in the claims, a list of items joined by the term "one or more of" may mean any combination of the listed terms. For example, the phrases "one or more of A, B or C" may mean A; B; C; A and B; A and C; B and C; or A, Band C.

Those skilled in the art will appreciate from the foregoing description that the broad techniques of the embodiments can be implemented in a variety of forms. Therefore, while the embodiments have been described in connection with particular examples thereof, the true scope of the embodiments should not be so limited since other modifications will become apparent to the skilled practitioner upon a study of the drawings, specification, and following claims.

## Claims

1. A multiply-accumulate, MAC, processor comprising:
logic implemented at least partly in one or more of configurable or fixed-functionality hardware, the logic including a plurality of arithmetic blocks, wherein the plurality of arithmetic blocks each contain multiple multipliers, and wherein the logic is to combine multipliers either within each arithmetic block or across multiple arithmetic blocks;
**characterised in that**
the logic is further configured to arrange sparsity information and to implement and feed data to the plurality of arithmetic blocks based upon the arrangement of the sparsity information.

2. **The** MAC processor of claim 1, wherein one or more intermediate multipliers are of a size that is less than precisions supported by arithmetic blocks containing the one or more intermediate multipliers.

3. The MAC processor of claim 2, wherein the logic is to map one or more smaller multipliers to partial products of the one or more intermediate multipliers, and wherein the one or more smaller multipliers are of a size that is less than the size of the one or more intermediate multipliers.

4. The MAC processor of claim 2, wherein the logic is to combine the one or more intermediate multipliers to obtain one or more larger multipliers, and wherein the one or more larger multipliers are of a size that is greater than the size of the one or more intermediate multipliers.

5. The MAC processor of claim 2, wherein the logic is to:
sum partial products in rank order; and
shift the summed partial products to obtain shifted partial products; and
add the shifted partial products to obtain one or more of larger multipliers, sums of larger multipliers or sums of smaller multipliers.

6. The MAC processor of claim 2, wherein the logic is to:
pre-code groups of smaller multiplier products; and
add the pre-coded groups of smaller multiplier products.

7. The MAC processor of claim 6, wherein the logic is to multiply pre-coded combinations of smaller multiplier products by a constant to obtain a sum.

8. The MAC processor of claim 1, wherein all of the multiple multipliers are of a same precision.

9. The MAC processor of claim 1, wherein the logic is to:
source one or more arithmetic blocks by a plurality of input channels; and
decompose each of the plurality of input channels into smaller input channels.

10. The MAC processor of claim 1, wherein the logic is to add multiplier outputs in rank order across the plurality of arithmetic blocks.

11. The MAC processor of claim 1, wherein the logic is to decode subsets of weights and activations as a multiplier pre-process operation.

12. The MAC processor of claim 1, wherein the logic is to invert individual partial products to operate one or more multipliers as a signed magnitude multiplier.

13. The MAC processor of claim 12, wherein, for a group of multipliers, the logic is to:
sum ranks of partial products; and
sum a group of partial products in a different radix format separately from the ranks of partial products.

14. The MAC processor of claim 13, wherein the group of multipliers one or more of provide unsigned multiplication or are in signed magnitude format.

## Patentansprüche

1. Multiply-Accumulate- bzw. MAC-Prozessor, der Folgendes umfasst:
eine Logik, die zumindest teilweise in konfigurierbarer Hardware und/oder Hardware mit fester Funktionalität implementiert ist, wobei die Logik mehrere arithmetische Blöcke beinhaltet, wobei die mehreren arithmetischen Blöcke jeweils mehrere Multiplizierer enthalten und wobei die Logik Multiplizierer entweder innerhalb jedes arithmetischen Blocks oder über mehrere arithmetische Blöcke hinweg kombinieren soll;
**dadurch gekennzeichnet, dass**
die Logik ist ferner dazu ausgelegt ist, Dünnbesetztheitsinformationen anzuordnen und Daten basierend auf der Anordnung der Dünnbesetztheitsinformationen zu implementieren und an die mehreren arithmetischen Blöcke zu speisen.

2. MAC-Prozessor nach Anspruch 1, wobei ein oder mehrere Zwischenmultiplizierer eine Größe aufweisen, die kleiner als durch arithmetische Blöcke, die den einen oder die mehreren Zwischenmultiplizierer enthalten, unterstützte Genauigkeiten ist.

3. MAC-Prozessor nach Anspruch 2, wobei die Logik einen oder mehrere kleinere Multiplizierer auf Teilprodukte des einen oder der mehreren Zwischenmultiplizierer abbilden soll und wobei der eine oder die mehreren kleineren Multiplizierer eine Größe aufweisen, die kleiner als die Größe des einen oder der mehreren Zwischenmultiplizierer ist.

4. MAC-Prozessor nach Anspruch 2, wobei die Logik den einen oder die mehreren Zwischenmultiplizierer kombinieren soll, um einen oder mehrere größere Multiplizierer zu erhalten, und wobei der eine oder die mehreren größeren Multiplizierer eine Größe aufweisen, die größer als die Größe des einen oder der mehreren Zwischenmultiplizierer ist.

5. MAC-Prozessor nach Anspruch 2, wobei die Logik Folgendes durchführen soll:
Summieren von Teilprodukten in einer Rangfolge; und
Verschieben der summierten Teilprodukte, um verschobene Teilprodukte zu erhalten; und
Addieren der verschobenen Teilprodukte, um größere Multiplizierer und/oder Summen größerer Multiplizierer und/oder Summen kleinerer Multiplizierer zu erhalten.

6. MAC-Prozessor nach Anspruch 2, wobei die Logik Folgendes durchführen soll:
Vorcodieren von Gruppen kleinerer Multipliziererprodukte; und
Addieren der vorcodierten Gruppen kleinerer Multipliziererprodukte.

7. MAC-Prozessor nach Anspruch 6, wobei die Logik vorcodierte Kombinationen kleinerer Multipliziererprodukte mit einer Konstante multiplizieren soll, um eine Summe zu erhalten.

8. MAC-Prozessor nach Anspruch 1, wobei alle der mehreren Multiplizierer eine gleiche Genauigkeit aufweisen.

9. MAC-Prozessor nach Anspruch 1, wobei die Logik Folgendes durchführen soll:
Beziehen eines oder mehrerer arithmetischer Blöcke durch mehrere Eingangskanäle; und
Zerlegen jedes der mehreren Eingangskanäle in kleinere Eingangskanäle.

10. MAC-Prozessor nach Anspruch 1, wobei die Logik Multipliziererausgänge in einer Rangfolge über die mehreren arithmetischen Blöcke hinweg hinzufügen soll.

11. MAC-Prozessor nach Anspruch 1, wobei die Logik Teilmengen von Gewichtungen und Aktivierungen als eine Multiplizierer-Vorverarbeitungsoperation decodieren soll.

12. MAC-Prozessor nach Anspruch 1, wobei die Logik einzelne Teilprodukte invertieren soll, um einen oder mehrere Multiplizierer als einen Vorzeichenbetragsmultiplizierer zu betreiben.

13. MAC-Prozessor nach Anspruch 12, wobei die Logik für eine Gruppe von Multiplizierern Folgendes durchführen soll:
Summieren von Rängen von Teilprodukten; und
Summieren einer Gruppe von Teilprodukten in einem anderen Radixformat getrennt von den Rängen von Teilprodukten.

14. MAC-Prozessor nach Anspruch 13, wobei die Gruppe von Multiplizierern vorzeichenlose Multiplikation bereitstellen und/oder im Vorzeichenbetragsformat vorliegen.

## Revendications

1. Processeur de multiplication-accumulation, MAC, comprenant :
une logique mise en œuvre au moins en partie dans un ou plusieurs éléments matériels à fonctionnalité configurable ou fixe, la logique comprenant une pluralité de blocs arithmétiques, la pluralité de blocs arithmétiques contenant chacun plusieurs multiplicateurs, et la logique devant combiner des multiplicateurs soit à l'intérieur de chaque bloc arithmétique, soit à travers plusieurs blocs arithmétiques ;
**caractérisé en ce que**
la logique est en outre configurée pour disposer des informations de parcimonie et pour implémenter et envoyer des données à la pluralité de blocs arithmétiques sur la base de l'agencement des informations de parcimonie.

2. Processeur MAC selon la revendication 1, dans lequel un ou plusieurs multiplicateurs intermédiaires ont une taille qui est inférieure aux précisions supportées par des blocs arithmétiques contenant les un ou plusieurs multiplicateurs intermédiaires.

3. Processeur MAC selon la revendication 2, dans lequel la logique comprend de mapper un ou plusieurs multiplicateurs plus petits sur des produits partiels des un ou plusieurs multiplicateurs intermédiaires, et dans lequel les un ou plusieurs multiplicateurs plus petits ont une taille qui est inférieure à la taille des un ou plusieurs multiplicateurs intermédiaires.

4. Processeur MAC selon la revendication 2, dans lequel la logique comprend de combiner les un ou plusieurs multiplicateurs intermédiaires pour obtenir un ou plusieurs multiplicateurs plus grands, et dans lequel les un ou plusieurs multiplicateurs plus grands sont d'une taille qui est supérieure à la taille des un ou plusieurs multiplicateurs intermédiaires.

5. Processeur MAC selon la revendication 2, dans lequel la logique est destinée à :
sommer des produits partiels selon un ordre hiérarchique ; et
décaler les produits partiels sommés pour obtenir des produits partiels décalés ; et
ajouter les produits partiels décalés pour obtenir un ou plusieurs multiplicateurs plus grands, des sommes de multiplicateurs plus grands ou des sommes de multiplicateurs plus petits.

6. Processeur MAC selon la revendication 2, dans lequel la logique est destinée à :
pré-coder des groupes de produits de multiplicateurs plus petits ; et
ajouter les groupes pré-codés de produits de multiplicateurs plus petits.

7. Processeur MAC selon la revendication 6, dans lequel la logique est destinée à multiplier des combinaisons pré-codées de produits de multiplicateurs plus petits par une constante pour obtenir une somme.

8. Processeur MAC selon la revendication 1, dans lequel tous les multiplicateurs ont la même précision.

9. Processeur MAC selon la revendication 1, dans lequel la logique est destinée à :
alimenter un ou plusieurs blocs arithmétiques au moyen d'une pluralité de canaux d'entrée ; et
décomposer chacun de la pluralité de canaux d'entrée en canaux d'entrée plus petits.

10. Processeur MAC selon la revendication 1, dans lequel la logique est destinée à ajouter des sorties de multiplicateur selon un ordre hiérarchique à travers la pluralité de blocs arithmétiques.

11. Processeur MAC selon la revendication 1, dans lequel la logique est destinée à décoder des sous-ensembles de poids et d'activations en tant qu'opération de pré-traitement de multiplicateur.

12. Processeur MAC selon la revendication 1, dans lequel la logique est destinée à inverser des produits partiels individuels pour faire fonctionner un ou plusieurs multiplicateurs comme multiplicateur d'amplitude signé.

13. Processeur MAC selon la revendication 12, dans lequel, pour un groupe de multiplicateurs, la logique est destinée à :
sommer les rangs des produits partiels ; et
sommer un groupe de produits partiels dans un format de base différent séparément des rangs de produits partiels.

14. Processeur MAC selon la revendication 13, dans lequel, parmi le groupe de multiplicateurs, un ou plusieurs multiplicateurs délivrent une multiplication non signée ou ont un format signé en valeur absolue.
